(19) Europäisches Patentamt
European Patent Office
Office européen des brevets

(11) EP 1 709 100 B1

(12) **EUROPEAN PATENT SPECIFICATION**

(45) Date of publication and mention of the grant of the patent:
**10.07.2013 Bulletin 2013/28**

(21) Application number: **05704942.1**

(22) Date of filing: **04.01.2005**

(51) Int Cl.:
***C08G 63/00*** *(2006.01)* ***C08K 5/12*** *(2006.01)*

(86) International application number:
**PCT/US2005/000108**

(87) International publication number:
**WO 2005/073271 (11.08.2005 Gazette 2005/32)**

(54) **COMPOSITIONS USEFUL AS COATINGS, THEIR PREPARATION, AND ARTICLES MADE THEREFROM**

ALS BESCHICHTUNG GEEIGNETE ZUSAMMENSETZUNGEN, DEREN HERSTELLUNG UND DARAUS HERGESTELLTE GEGENSTÄNDE

COMPOSITIONS UTILES EN TANT QUE REVETEMENTS, PREPARATION DE CES COMPOSITIONS ET ARTICLES REALISES A PARTIR DE CES DERNIERES

(84) Designated Contracting States:
**AT BE BG CH CY CZ DE DK EE ES FI FR GB GR HU IE IS IT LI LT LU MC NL PL PT RO SE SI SK TR**

(30) Priority: **17.01.2004 US 538081 P**
**06.04.2004 US 819524**
**30.11.2004 US 000476**

(43) Date of publication of application:
**11.10.2006 Bulletin 2006/41**

(73) Proprietor: **SABIC Innovative Plastics IP B.V.**
**4612 PX Bergen op Zoom (NL)**

(72) Inventors:
- **ACAR, Ali, Ersin**
**34347 Ortakoy, Istanbul (TR)**
- **KOENIGER, Rainer**
**Clifton Park, NY 12065 (US)**
- **MERFELD, Glen, David**
**Loudonville, NY 12211 (US)**

(74) Representative: **Modiano, Micaela Nadia et al**
**Modiano Josif Pisanty & Staub Ltd**
**Thierschstrasse 11**
**80538 München (DE)**

(56) References cited:
**EP-A- 0 331 312** **EP-A- 0 884 342**
**EP-A- 0 918 061** **WO-A-2004/011541**
**DE-A1- 2 310 058** **US-A- 4 076 665**
**US-A- 4 533 720** **US-A- 4 567 240**
**US-A- 5 043 413** **US-A- 5 096 997**
**US-A- 5 241 037** **US-A- 5 464 923**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 709 100 B1

## Description

RELATED APPLICATION

This application is a Continuation-in-Part of Non-Provisional U.S. Patent Application No. 10/819,524, filed on April 6, 2004 which is a non-provisional application based upon provisional application Serial No. 60/538,081 filed January 17, 2004.

BACKGROUND OF THE INVENTION

This invention relates to compositions comprising polyarylates, the methods of preparing polyarylates and articles prepared using the compositions of the present invention.

Modem commerce and technology frequently employ organic coatings to shield various sensitive substrates from the harmful effects of the environment. Many such coatings are limited by long-term color instability, a limitation which is evidenced by a yellowing of the organic coating over time. Yellowing due to a coating's constituent polymeric components may be caused by the action of ultraviolet (UV) radiation. Another frequently encountered problem with organic coatings based on polymeric materials is poor resistance of the coating to chemicals and solvents after its application. Coatings which are tough, chemically resistant and "weatherable" (i.e. resistant to the effects of sunlight and other environmental conditions) are highly prized and diligently sought after.

Generally it has been observed that there is a tradeoff between weatherability and toughness in the performance of the commercial coating compositions known in the art. One solution to this problem has been the combination of extremely tough epoxies with polyesters to provide coatings with improved weatherability. Similarly acrylates, which are known to exhibit good weatherability, but poor toughness, have been combined with polyester resins to improve their toughness. Compositions containing polyoxymethylene resins and various additives to improve toughness or impact strength are also known.

Certain types of polyarylates, known for their good weatherability and chemical resistance, have been found in the instant invention to be useful in the preparation of novel coating compositions having excellent chemical resistance and other properties.

Up to the present, polyarylates useful in the preparation of novel coating compositions have been limited to hydroxy-terminated polyarylates. Hydroxy-terminated polyarylates have been prepared under interfacial reaction conditions, and most recently under homogeneous reaction conditions. United States Patent Application serial number 10/676,892, which is incorporated herein by reference, disclose an efficient method for the preparation of hydroxy-terminated polyarylates under homogeneous reaction conditions. Despite recent strides in the preparation of hydroxy-terminated polyarylates under interfacial and homogeneous reaction conditions, it would' nonetheless be highly desirable to provide polyarylates incorporating reactive functional groups other than terminal hydroxy groups for use in the preparation of novel materials.

Further, it remains of interest, to develop additional novel coating compositions that demonstrate scratch resistance, toughness, chemical resistance and weatherability, suitable for application over various types of substrates in a wide variety of applications. There is also a need for new synthetic methodology to prepare polymers comprising resorcinol chain members, having controlled molecular weight and which incorporate terminal functional groups other than hydroxy groups. The instant invention addresses these and other challenges and provides new and highly efficient solutions to them.

BRIEF SUMMARY OF THE INVENTION

In one aspect, the present invention provides a cured composition comprising components A, B and optionally C:

(i) component A comprising at least one polyarylate, said polyacrylate comprising structural units having formula I

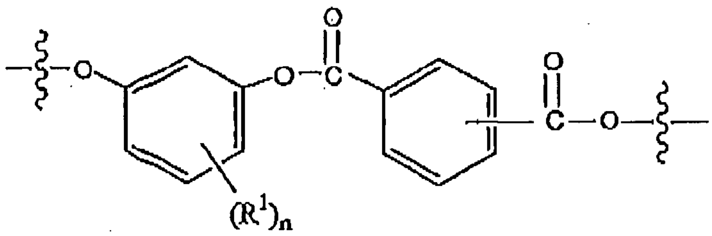

Formula (I)

wherein $R^1$ is independently at each occurrence a $C_1$-$C_{12}$ alkyl radical and n is 0-3, said polyarylate further comprising terminal carboxy groups;

(ii) component B comprising at least one "organic species" comprising one or more functional groups, said functional groups being chemically reactive with the terminal carboxy groups of the polyarylate of component A, wherein the functional groups of component B are selected from the group consisting of isocyanates, epoxies, aliphatic esters, hydroxyl groups, and aromatic esters; and optionally

(iii) component C one or more catalysts which promote chemical reaction between the polyarylate terminal carboxy groups of component A and the "organic species" of component B.

In another aspect, the present invention provides a method for preparing a cured composition as defined above comprising forming a mixture of coating components comprising component A and component B and curing the mixture of coating components. In still another aspect, the present invention provides an article comprising a cured composition as defined above.

DETAILED DESCRIPTION OF THE INVENTION

The present invention may be understood more readily by reference to the following detailed description of preferred embodiments, of the invention and the examples included therein. In the following specification and the claims which follow, reference will be made to a number of terms which shall be defined to have the following meanings:

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not

As used herein, the term "functionalized polyarylate" refers to a polyarylate species derived from a precursor polyarylate comprising at least one chlorocarbonyl group. For example, a functionalized polyarylate "derived from" a polyarylate species comprising at least one chlorocarbonyl group may refer to a polyarylate obtained by the reaction of the chlorocarbonyl groups of a chlorocarbonyl group-containing polyarylate (a precursor polyarylate) with at least one functionalizing agent, for example glycidyl alcohol, or as a further example of a functionalizing agent, water. A functionalized polyarylate may also refer to a polyarylate which comprises reactive endgroups obtained by first reacting a chlorocarbonyl group-containing polyarylate with a first functionalizing agent, for example diallyl amine to obtain a first functionalized polyarylate comprising diallyl amido ($(C_3H_5)_2NCO$--) functional groups, followed by reaction of the diallyl amido functional groups with meta-chloroperoxybenzoic acid to afford a second functionalized polyarylate comprising diglycidyl amido ($(C_3H_5O)_2NCO$--) groups. An aspect of the meaning of "derived from" is illustrated by the reaction of an intermediate polyarylate comprising chlorocarbonyl endgroups with an amount of water sufficient to convert at least a portion of the chlorocarbonyl endgroups to the corresponding anhydrides, and subsequent reaction of the anhydride groups with a functionalizing agent, for example water or glycine to produce a functionalized polyarylate. In the example just given, when water is used as the functionalizing agent, the product functionalized polyarylate comprises carboxylic acid endgroups attached directly to an aromatic ring. Similarly, with reference to the example just given, when glycine is used as the functionalizing agent the product functionalized polyarylate comprises carboxymethylamido groups (HO2CCH2NHCO---). Those skilled in the art will recognize that the product functionalized polyarylate produced in this example comprises, in addition to carboxymethylamido groups, carboxy groups which are formed as a by-product in the reaction of the amino group of glycine with the anhydride groups.

As used herein the term "aliphatic radical" refers to an organic radical having a valence of at least one comprising a linear or branched array of atoms which is not cyclic. Aliphatic radicals are defined to comprise at least one carbon atom. The array of atoms comprising the aliphatic radical may include heteroatoms such as nitrogen, sulfur, silicon, selenium and oxygen or may be composed exclusively of carbon and hydrogen. For convenience, the term "aliphatic

radical" is defined herein to encompass, as part of the "linear or branched array of atoms which is not cyclic" a wide range of functional groups such as alkyl groups, alkenyl groups, alkynyl groups, halo alkyl groups , conjugated dienyl groups, alcohol groups, ether groups, aldehyde groups, ketone groups, carboxylic acid groups, acyl groups (for example carboxylic acid derivatives such as esters and amides), amine groups, nitro groups and the like. For example, the 4-methylpent-1-yl radical is a $C_6$ aliphatic radical comprising a methyl group, the methyl group being a functional group which is an alkyl group. Similarly, the 4-nitrobut-1-yl group is a $C_4$ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl; difluorovinylidene; trichloromethyl, bromodichloromethyl, bromoethyl, 2-bromotrimethylene (e.g. $-CH_2CBBrCH_2-$), and the like. Further examples of aliphatic radicals include allyl, aminocarbonyl (i.e. - $CONH_2$), carbonyl, dicyanoisopropylidene (i.e. $-CH_2C(CN)_2CH_2-$), methyl (i.e. $-CH_3$), methylene (i.e. $-CH_2-$), ethyl, ethylene, formyl (i.e.-CHO), hexyl, hexamethylene, hydroxymethyl (i.e.$-CH_2OH$), mercaptomethyl (i.e. $-CH_2SH$), methylthio (i.e. - $SCH_3$), methylthiomethyl (i.e. $-CH_2SCH_3$), methoxy, methoxycarbonyl (i.e. $CH_3OCO-$), nitromethyl (i.e. $-CH_2NO_2$), thiocarbonyl, trimethylsilyl (i.e.$(CH_3)_3Si-$), t-butyldimethylsilyl, trimethyoxysilypropyl (i.e. $(CH_3O)_3SiCH_2CH_2CH_2-$), vinyl, vinylidene, and the like. By way of further example, a $C_1$ - $C_{10}$ aliphatic radical contains at least one but no more than 10 carbon atoms. A methyl group (i.e. $CH_3-$) is an example of a $C_1$ aliphatic radical. A decyl group (i.e. $CH_3(CH2)_{10}-$) is an example of a $C_{10}$ aliphatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group ($C_6H_{11}CH_2-$) is an cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, halo alkyl groups , conjugated dienyl groups, alcohol groups, ether groups, aldehyde groups, ketone groups, carboxylic acid groups, acyl groups (for example carboxylic acid derivatives such as esters and amides), amine groups, nitro groups and the like. For example, the 4-methylcyclopent-1-yl radical is a $C_6$ cycloaliphatic radical comprising a methyl group, the methyl group being a functional group which is an alkyl group. Similarly, the 2-nitrocyclobut-1-yl radical is a $C_4$ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene2,2-bis (cyclohex-4-yl) (i.e. $-C_6H_{10}C(CF_3)_2C_6H_{10}-$), 2-chloromethylcyclohex-1-yl; 3- difluoromethylenecyclohex-1-yl; 4-trichloromethylcyclohex-1-yloxy, 4-bromodichloromethylcyclohex-1-ylthio, 2-bromoethylcyclopent-1-yl, 2-bromopropylcyclohex-1-yloxy (e.g. $CH_3CHBrCH_2C_6H_{10}-$), and the like. Further examples of cycloaliphatic radicals include 4-allyloxycyclohex-1-yl, 4-aminocyclohex-1-yl (i.e. $H_2NC_6H_{10}-$), 4-aminocarbonylcyclopent-1-yl (i.e. $NH_2COC_5H_8-$), 4-acetyloxycyclohex-1-yl, 2,2-dicyanoisopropylidenebis(cyclohex-4-yloxy) (i.e. $-OC_6H_{10}C(CN)_2C_6H_{10}O-$), 3-methylcyclohex-1-yl, methylenebis(cyclohex-4-yloxy) (i.e. $-OC_6H_{10}CH_2C_2H_{10}O-$), 1-ethylcyclobut-1-yl, cyclopropylethenyl, 3-formyl-2-terahydrofuranyl, 2-hexyl-5-tetrahydrofuranyl; hexamethylene-1,6-bis(cyclohex-4-yloxy) (i.e. - $OC_6H_{10}(CH_2)_6C_6H_{10}O-$); 4-hydroxymethylcyclohex-1-yl (i.e. 4-$HOCH_2C_6H_{10}-$), 4-mercaptomethylcyclohex-1-yl (i.e. 4-$HSCH_2C_6H_{10}-$), 4-methylthiocyclohex-1-yl (i.e. 4-$CH_3SC_6H_{10}-$), 4-methoxycyclohex-1-yl, 2-methoxycarbonylcyclohex-1-yloxy (2-$CH_3OCOC_6H_{10}O-$), 4-nitromethylcyclohex-1-yl (i.e. $NO_2CH_2C_6H_{10}-$), 3-trimethylsilylcylohex-1-yl, 2-t-butyldimethylsilylcyclopent-1-yl, 4-trimethoxysilylethylcyclohex-1-yl (e.g. $(CH_3O)_3SiCH_2CH_2C_6H_{10}-$), 4-vinylcyclohexen-1-yl, vinylidenebis(cyclohexyl), and the like. The term "a $C_3$ - $C_{10}$ cycloaliphatic radical" includes cycloaliphatic radicals containing at least three but no more than 10 carbon atoms. The cycloaliphatic radical 2-tetrahydrofuranyl ($C_4H_7O-$) represents a $C_4$ cycloaliphatic radical. The cyclohexylmethyl radical ($C_6H_{11}CH_2-$) represents a $C_7$ cycloaliphatic radical.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatio components. For example, a benzyl group is an aromatic radical such comprises a phenyl ring (the aromatic group) and a methylene group (the nonaromatic component). Similarly a tetrahydronaphthyl radical is an aromatic radical comprising

an aromatic group ($C_6H_3$) fused to a nonaromatic component $-(CH_2)_4-$. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehydes groups, ketone groups, carboxylic acid groups, acyl groups (for example carboxylic acid derivatives such as esters and amides), amine groups, nitro groups, and the like. For example, the 4-methylphenyl radical is a $C_7$ aromatic radical comprising a methyl group, the methyl group being a functional group which is an alkyl group. Similarly, the 2-nitrophenyl group is a $C_6$ aromatic radical comprising a nitro group, the nitro group being a functional group. Aromatic radicals include halogenated aromatic radicals such as trifluoromethylphenyl, hexafluoroisopropylidenebis(4-phen-1-yloxy) (i.e. - OPhC$(CF_3)_2$PhO-), chloromethylphenyl; 3-trifluorovinyl-2-thienyl; 3-trichloromethylphen-1-yl (i.e. 3-$CCl_3$Ph-), 4(3-bromoprop-1-yl)phen-1-yl (i.e. $BrCH_2CH_2CH_2$Ph-), and the like. Further examples of aromatic radicals include 4-allyloxyphen-1-oxy, 4-aminophen-1-yl (i.e. $H_2$NPh-), 3-aminocarbonylphen-1-yl (i.e. $NH_2$COPh-), 4-benzoylphen-1-yl, dicyanoisopropylidenebis(4-phen-1-yloxy) (i.e. - OPhC$(CN)_2$PhO-). 3-methylphen-1-yl, methylenebis(phen-4-yloxy) (i.e. -OPh$CH_2$PhO-), 2-ethylphen-1-yl, phenylethenyl, 3-formyl-2-thienyl, 2-hoxyl-5-furanyl; hexamethylene-1,6-bis(phen-4-yloxy) (i.e. -OPh$(CH_2)_6$PhO-); 4-hydroxymethylphen-1-yl (i.e. 4-$HOCH_2$Ph-), 4-mercaptomethylphen-1-yl (i.e. 4-$HSCH_2$Ph-), 4-methylthiophen-1-yl (i.e. 4-$CH_3$SPh-), 3-methoxyphen-1-yl, 2-methoxycarbonylphen-1-yloxy (e.g. methyl salicyl), 2-nitromethylphen-1-yl (i.e.-Ph$CH_2NO_2$), 3-trimethylsilylphen-1-yl, 4-t-butyldimethylsilylphenl-1-yl, 4-vinylphen-1-yl, vinylidenebis(phenyl), and the like. The term "a $C_3$ - $C_{10}$ aromatic radical" includes aromatic radicals containing at least three but no more than 10 carbon atoms. The aromatic radical 1-imidazolyl ($C_3H_2N_2$-) represents a $C_3$ aromatic radical. The benzyl radical ($C_7H_8$-) represents a $C_7$ aromatic radical.

As noted, the present invention provides a cured composition comprising components A, B and optionally C, wherein component A comprises at least one carboxy-terminated polyarylate having structural units of formula I, component B is an organic species which can react with the carboxy terminal groups of component A, and Component C is a catalyst or mixture of catalysts.

Typically component A comprises a carboxy-terminated polyarylate comprising arylate polyester chain members. Said chain members comprise at least one dihydroxy-substituted aromatic hydrocarbon moiety in combination with at least one aromatic dicarboxylic acid moiety. In one particular embodiment the dihydroxy-substituted aromatic hydrocarbon moiety is derived from a 1,3-dihydroxybenzene moiety, illustrated in the structural moiety of formula (II), commonly referred to throughout this specification as resorcinol or a resorcinol moiety. In formula (II), $R^2$ is at least one of $C_1$-$C_{12}$ alkyl or halogen, and n is 0-3. The term "resorcinol" or "resorcinol moiety" as used within the context of the present invention should be understood to include both unsubstituted 1,3-dihydroxybenzene and substituted 1,3-dihydroxybenzenes unless explicitly stated otherwise. The concentration of component A of formula I, in the composition is in the range of about 1 to about 99 percent by weight of the composition. In one embodiment, the concentration of structural units of formula II in component A is in a range between about 0.01 and about 50 percent by weight of the total weight of the composition. In another embodiment, the concentration of structural units of formula II in component A is in a range between about 0.1 and about 20 percent by weight of the total weight of the composition. In yet another embodiment the concentration of structural units II in component A is in a range between about 0.1 and about 10 percent by weight of the total weight of the composition.

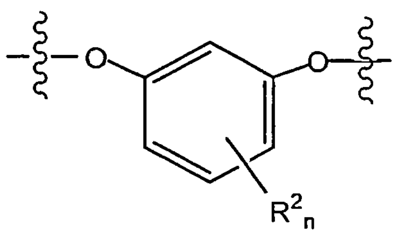

Formula (II)

Suitable dicarboxylic acid residues include aromatic dicarboxylic acid residues derived from monocyclic moieties, including isophthalic acid, terephthalic acid, or mixtures of isophthalic and terephthalic acids, or from polycyclic moieties. In various embodiments, the aromatic dicarboxylic acid residues are derived from mixtures of isophthalic and terephthalic acids as typically illustrated in the structural moiety of formula (III).

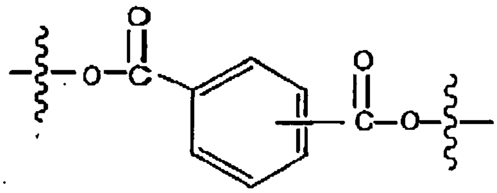

Formula (III)

Therefor, in one particular embodiment, the present invention provides compositions comprising carboxy-terminated polyarylates, said polyarylates comprising resorcinol-arylate polyester chain members as typically illustrated in the structural moiety of formula (I) wherein $R^1$ and n are as previously defined.

The carboxy-terminated polyarylates present in component A may be prepared as disclosed herein via the reaction in an inert solvent of at least one dihydroxy aromatic compound with a stoichiometric excess of at least one diacid chloride in the presence of an organic base and sufficient water to produce at least one anhydride linkage in the product polyarylate,

In earlier studies it was found that control of the molecular weight during the preparation of hydroxy-terminated polyarylates was difficult to achieve. In the absence of a chain-stopper, the molecular weight of a hydroxy-terminated polyarylate produced interfacially by reaction of a dihydroxy-substituted aromatic compound with a diacid chloride is relatively insensitive to stoichiometric control. This is particularly true when the dihydroxy-substituted aromatic compound and its salts are highly insoluble in the solvent forming the organic phase of the interfacial reaction mixture. Earlier attempts to control polyarylate molecular weight led to the discovery that by increasing the molar ratio of the dihydroxy-substituted aromatic compound to the diacid chloride employed, and by decreasing the amount of water present in the interfacial reaction of the dihydroxy-substituted aromatic compound with the diacid chloride, enhanced control of the molecular weight of the hydroxy-terminated polyarylate could be achieved without the use of an end capping agent. A failure to control the molecular weight of the hydroxy-terminated polyarylate limits its utility in the preparation of coatings due to the higher glass transition temperatures (Tg) and lower concentration of hydroxyl end groups of the higher molecular weight hydroxy-terminated polyarylates relative to oligomeric hydroxy-terminated polyarylates.

In one aspect, the present disclosure provides a method for producing low molecular weight carboxy-terminated polyarylates which, because of their lower molecular weight, higher concentration of reactive carboxy groups, and lower glass transition temperature, are especially well suited for use in various coating applications.

It has been discovered within the context of the present disclosure that-excellent control over the molecular weight of the carboxy-terminated polyarylate can achieved when the polyarylate is prepared in a reaction medium wherein the organic reactants (in particular the dihydroxy-substituted aromatic compound) are fully soluble. Thus, in one aspect, the present disclosure provides a method for preparing carboxy-terminated polyarylates having low molecular weight in a process in which reaction of one or more dihydroxy-substituted aromatic hydrocarbon moieties with a stoichiometric excess of at least one dicarboxylic acid moiety is carried out under conditions which are essentially homogeneous with respect to the organic reactants.

The novel method disclosed herein is especially well suited for preparing low molecular weight carboxy-terminated polyarylates of widely varying molecular weights and having widely varying structural units. By "low molecular weight" it is meant that the polyarylate has a weight average molecular weight of 15,000 grams per mole or less as measured by gel permeation chromatography (GPC) using polystyrene (PS) molecular weight standards. For purposes of this disclosure, the terms "oligomeric polyarylate" and "low molecular weight polyarylate" are used interchangeably.

In one aspect, the present disclosure provides a method of preparing carboxy-terminated polyarylates. Thus, the method comprises contacting in a reaction mixture at least one dihydroxy-substituted aromatic compound, at least one organic base, and a stoichiometric excess of at least one dicarboxylic acid dichloride (for convenience preferred to as a "diacid chloride"), in at least one inert organic solvent, in the presence of an amount of water sufficient to provide an "initially-formed polyarylate" comprising at least one anhydride linkage, and hydrolysis of the anhydride linkage present in the initially formed polyarylate affords the carboxy-terminated polyarylate.

In one aspect, the overall process is conveniently described in terms of four steps:

A first step (step a) in which are combined at least one dihydroxy-substituted aromatic hydrocarbon moiety (also referred to interchangeably as a "dihydroxy-substituted aromatic hydrocarbon compound" or a "dihydroxy-substituted aromatic hydrocarbon"), and at least one organic base in an inert organic solvent to form a mixture, said dihydroxy-substituted aromatic hydrocarbon moiety being substantially soluble in said mixture, said dihydroxy-substituted aromatic hydrocarbon being used in a molar amount;

A second step (step b) in which the mixture formed in step (a) is combined with at least one dicarboxylic acid dichloride in a molar amount such that the molar amount of the dihydroxy-substituted aromatic hydrocarbon in the mixture is stoichiometrically deficient relative to the total molar amount of dicarboxylic acid dichloride, to form a reaction mixture;

A third step (step c) comprising agitating the reaction mixture formed in step (b) in the presence of an amount of water sufficient to provide at least one anhydride linkage, to form a polyarylate comprising at least one anhydride linkage (referred to herein as "the initially formed polyarylate"); and

A fourth step (step d) in which the polyarylate comprising at least one anhydride linkage is subjected to hydrolytic conditions under which the anhydride linkage is cleaved to produce a carboxy-terminated polyarylate.

In an alternate embodiment of the method of the present disclosure the first step (step a above) comprises combining at least one dihydroxy-substituted aromatic hydrocarbon moiety and optionally one or more dihydroxy-substituted aliphatic moieties, and at least one organic base in an inert organic solvent to form a mixture, said dihydroxy-substituted aromatic hydrocarbon moiety being substantially soluble in said mixture, said dihydroxy-substituted aromatic hydrocarbon and said optional dihydroxy-substituted aliphatic moiety being used in a molar amount.

In yet another embodiment of the method of the present disclosure the first step (step a above) comprises preparing a plurality of mixtures which are then added to a reaction mixture. Comparative examples 31 of the experimental section below illustrates an example of such an embodiment.

In the first step, at least one dihydroxy-substituted aromatic hydrocarbon moiety is mixed with at least one organic base in at least one inert organic solvent to form a mixture. Typically, the mixture comprising the dihydroxy-substitated aromatic hydrocarbon moiety, the organic base, and the inert organic solvent is substantially homogeneous. In the context of the mixture formed by the dihydroxy-substituted aromatic hydrocarbon moiety, the organic base, and the inert organic solvent "substantially homogeneous" means that at least about 50 percent, preferably at least about 75 percent, and still more preferably at least about 90 percent of the dihydroxy-substituted aromatic hydrocarbon moiety is dissolved in the organic solvent.

Suitable dihydroxy-substituted aromatic hydrocarbons for preparing carboxy-terminated polyarylates include those represented by the formula (IV)

(IV) HO---D---OH

wherein D is a divalent aromatic radical. In some embodiments D has the structure of formula (V) ;

(V) 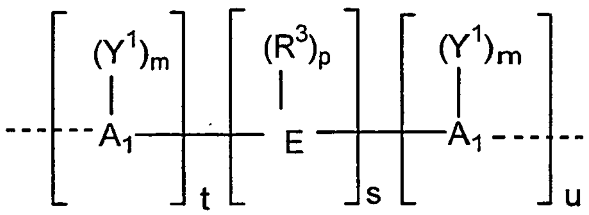

wherein each $A^1$ independently represents an aromatic radical such as phenylene, biphenylene, naphthylene, and the like. E may be an alkylene or alkylidene group such as methylene, ethylene, ethylidene, propylene, propylidene, isopropylidene, butylene, butylidene, isobutylidene, amylene, amylidene, isoamylidene, and the like. Where E is an alkylene or alkylidene group, it may also consist of two or more alkylene or alkylidene groups connected by a moiety different from alkylene or alkylidene, such as an aromatic linkage; a tertiary amino linkage; an ether linkage; a carbonyl linkage; a silicon-containing linkage; or a sulfur-containing linkage such as sulfide, sulfoxide, sulfone, and the like; or a phosphorus-containing linkage such as phosphinyl, phosphonyl, and the like. In addition, E may be a cycloaliphatic radical (e.g., cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, adamantylidene, etc.); a sulfur-containing linkage, such as sulfide, sulfoxide or sulfone; a phosphorus-containing linkage, such as phosphinyl, phosphonyl; an ether linkage; a carbonyl group; a tertiary nitrogen group; or a silicon-containing linkage, for example silicon-containing linkages comprising silane, siloxy, or polydimethylsiloxane moieties. $R^3$ is independently at each occurrence a monovalent hydrocarbon group such as alkyl, aryl, aralkyl, alkaryl, or cycloalkyl. $Y^1$ is independently at each occurrence an inorganic atom such as halogen (fluorine, bromine, chlorine, iodine); an inorganic group such as nitro; an organic group such as alkenyl, allyl, or $R^3$ above, or an oxy group such as OR. The letter "m" represents any integer from and including zero through the number of positions on $A^1$ available for substitution; "p" represents an integer from and including zero through the number

of positions on E available for substitution; "t" represents an integer equal to at least one; "s" is either zero or one; and "u" represents any integer including zero.

In the dihydroxy-substituted aromatic hydrocarbon compound in which D is represented by formula (V) above, when more than one $Y^1$ substituent is present, they may be the same or different. The same holds true for the $R^3$ substituent. Where "s" is zero in formula (V) and "u" is not zero, the aromatic groups $A^1$ are directly joined with no intervening alkylidene or other bridge. The positions of the hydroxyl groups and $Y^1$ on the aromatic groups $A^1$ can be varied in the ortho, meta, or para positions with respect to the positions of the hydroxy groups (not shown in figure V but indicated by the dashed lines) and the groupings can be in vicinal, asymmetrical or symmetrical relationship, where two or more ring carbon atoms of the hydrocarbon residue are substituted with $Y^1$ and hydroxyl groups. In some particular embodiments the parameters "t", "s", and "u" are each one; both aromatic groups $A^1$ are unsubstituted phenylene radicals; and E is an alkylidene group such as isopropylidene. In some particular embodiments both aromatic groups $A^1$ are p-phenylene, although both may be o- or m-phenylene or one o- or m-phenylene and the other p-phenylene.

Some illustrative, non-limiting examples of dihydroxy-substituted aromatic hydrocarbons represented by formula (V) include the dihydroxy-substituted aromatic hydrocarbons disclosed by name or formula (generic or specific) in U.S. Patent 4,217,438. Some particular examples of dihydroxy-substituted aromatic hydrocarbons include 4,4'-(3,3,5-trimethylcyclohexylidene)diphenol; 4,4'-bis(3,5-dimethyl)diphenol; 1,1-bis(4-hydroxy-3-methylphenyl)cyclohexane; 4,4-bis(4-hydroxyphenyl)heptane; 2,4'-dihydro;ydiphenylmethane; bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphenyl)ethane; 1,1-bis(4-hydroxy-2-chlorophenyl)ethane; 2,2-bis(4-hydroxyphenyl)propane (commonly known as bisphenol A); 2,2-bis(3-phenyl-4-hydroxyphenyl)propane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3,5-dimethylphenyl)propane; 3,5,3',5'-tetrachloro-4,4'-dihydroxyphenyl)propane; bis(4-hydroxyphenyl)cyclohexylmethane; 2,2-bis(4-hydroxyphenyl)-1-phenylpropane; 2,4'-dihydroxyphenyl sulfone; 2,6-dihydroxy naphthalene; hydroquinone; resorcinol; and $C_1$-$C_{12}$ alkyl-substituted resorcinols.

The term "alkyl" as used in the various embodiments of the present invention is intended to designate both normal alkyl, branched alkyl, aralkyl, cycloalkyl, and bicycloalkyl radicals. In various embodiments, normal and branched alkyl radicals are those containing from 1 to about 12 carbon atoms, and include as illustrative non-limiting examples methyl, ethyl, n-propyl, isopropyl, n-butyl, sec-butyl, tertiary-butyl, pentyl, neopentyl, hexyl, heptyl, octyl, nonyl, decyl, undecyl and dodecyl. In various embodiments cycloalkyl radicals are those containing from 3 to about 12 ring carbon atoms. Some illustrative non-limiting examples of these cycloalkyl radicals include cyclobutyl, cyclopentyl, cyclohexyl, methylcyclohexyl, and cycloheptyl. In various embodiments aralkyl radicals (also defined herein as "aromatic radicals") are those containing from 7 to about 14 carbon atoms; these include, _but are not limited to, benzyl, phenylbutyl, phenylpropyl, and phenylethyl. In various embodiments aryl radicals (also defined herein as "aromatic radicals") used in the various embodiments of the present invention are those containing from 6 to 18 ring carbon atoms. Some illustrative non-limiting examples of these aryl radicals include phenyl, biphenyl, and naphthyl.

In one embodiment of the present invention, the dihydroxy-substituted aromatic hydrocarbon is a resorcinol moiety having formula VI wherein $R^2$ and n are defined as in structure II.

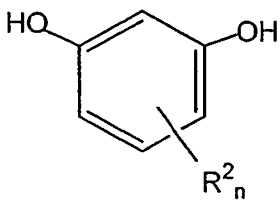

Formula (VI)

Alkyl groups, if present, are preferably straight-chain or branched alkyl groups, and are most often located in the position "ortho" to both oxygen atoms, although other ring locations are contemplated. Suitable $C_1$-$C_{12}$ alkyl groups include methyl, ethyl, n-propyl, isopropyl, butyl, iso-butyl, t-butyl, nonyl, and decyl, with methyl being particularly preferred. Suitable halogen groups are bromo, chloro, and fluoro groups. The value for n may be 0-3, preferably 0-2, and more preferably 0-1. A preferred resorcinol moiety is 2-methylresorcinol. The most preferred resorcinol moiety is an unsubstituted resorcinol moiety in which n is zero.

The organic base serves both to solubilize the dihydroxy-substituted aromatic moiety in the first step (step a) described above, to promote the polymerization reaction of the dihydroxy-substituted aromatic moiety and dicarboxylic acid dichloride in the third step (step c) described above, and to promote the hydrolysis of the anhydride linkage in the initially formed polyarylate in the fourth step (step d) described above. The organic base may be present in an amount

corresponding to between about 0.9 and about 10, and preferably between about 0.9 to 2.5 equivalents relative to the diacid chloride. Suitable organic bases comprise tertiary organic amines.

Suitable tertiary organic amines are illustrated by triethylamine, tributylamine; N,N-dimethyl-N-butylamine; N, N-diisopropyl-N-ethylamine; N,N-diethyl-N-methylamine; 2,2,6,6-tetramethylpiperidine, and mixtures thereof. Additional examples of suitable tertiary amines include $C_1$-$C_6$ N-alkylpyrrolidines, such as N-ethylpyrrolidine; $C_1$-$C_6$ N-alkylpiperidines, such as N-ethylpiperidine, N-methylpiperidine, and N-isopropylpiperidine; $C_1$-$C_6$ N-alklymorpholines, such as N-methylmorpholine and N-isopropyl-morpholine; $C_1$-$C_6$ N-alkyldihydroindoles, $C_1$-$C_6$ N-alkyldihydroisoindoles, $C_1$-$C_6$ N-alkyltetrahydroquinolines, $C_1$-$C_6$ N-alkyltetrahydroisoquinolines, $C_1$-$C_6$ N-alkylbenzomorpholines, 1-azabicyclo-[3.3.0]-octane, quinuclidine, $C_1$-$C_6$ N-alkyl-2-azabicyclo[2.2.1]octanes, $C_1$-$C_6$ N-alkyl-2-azabicyclo[3.3.1]nonanes, and $C_1$-$C_6$ N-alkyl-3-azabicyclo[3.3.1]nonanes; N,N,N',N'- tetraalkylalkylenediamines such as N,N,N',N'-tetraethyl-1,6-hexanediamine. Particularly preferred tertiary amines are triethylamine and N-ethylpiperidine.

Additional agents which may also be added to both to solubilize the dihydroxy-substituted aromatic moiety, to promote the polymerization reaction of the dihydroxy-substituted aromatic moiety and dicarboxylic acid dichlorides, and to promote the hydrolysis of the anhydride linkage in the initially formed polyarylate include quaternary ammonium salts, quaternary phosphonium salts, and mixtures thereof.

Suitable quaternary ammonium salts include tetraethylammonium bromide, tetraethylammonium chloride, tetrapropylammonium bromide, tetrapropylammonium chloride, tetrabutylammonium bromide, tetrabutylammonium chloride, methyltributylammonium chloride, benzyltributylammonium chloride, benzyltriethylammonium chloride, benzyltrimethylammonium chloride, trioctylmethylammonium chloride, cetyldimethylbenzylammonium chloride, octyltriethylammonium bromide, decyltriethylammonium bromide, lauryltriethylammonium bromide, cetyltrimethylammonium bromide, cetyltriethylammonium bromide, N-laurylpyridinium chloride, N- laurylpyridinium bromide, N-heptylpyridinium bromide, tricaprylylmethylammonium chloride (sometimes known as ALIQUAT 336), methyl tri-$C_8$-$C_{10}$ -alkyl-ammonium chloride (sometimes known as ADOGEN 464); and N,N,N',N',N'-pentaalkyl-alpha, omega-diammonium salts such as are disclosed in U.S. Pat. No. 5,821,322.

Suitable quaternary phosphonium salts arc illustrated by tetrabutylphosphonium bromide, benzyltriphenylphosphonium chloride, triethyloctadecylphosphonium bromide, tetraphenylphosphonium bromide, triphenylmethylphosphonium bromide, trioctylethylphosphonium bromide, and cetyltriethylphosphonium bromide.

Suitable inert organic solvents used in the preparation of carboxy-terminated polyarylates according to the method of the present disclosure include halogenated aliphatic solvents, halogenated aromatic solvents, aliphatic ketone solvents, aliphatic ester solvents, aliphatic ether solvents, aromatic ether solvents, aliphatic amide solvents, aliphatic hydrocarbon solvents, and aromatic hydrocarbon solvents. The inert organic solvents may be used singly or as mixtures of solvents. Halogenated aliphatic solvents are illustrated by dichloromethane, chloroform, trichloroethylene, tetrachloroethane, 1,2-dichloroethane and the like. Halogenated atomatic solvents are illustrated by chlorobenzene, ortho-dichlorobenzene, fluorobenzene, chlorotoluene, chloroxylene, chloronaphthalene, and the like. Aliphatic ketone solvents are illustrated by acetone, 2-butanone, cyclohexanone, dihydroisophorone, dihydrophorone, and the like. Aliphatic ester solvents are illustrated by methyl acetate, ethyl acetate, propyl acetate, and the like. Aliphatic ether solvents are illustrated by diethyl ether, tetrahydrofuran, dioxane, and the like. Aromatic ether solvents are illustrated by anisole, diphenyl ether, and the like. Aliphatic amide solvents are illustrated by N,N-dimethyformaide; N,N-dimethyacetamide, N-methyl-2-pyrrolidinone, and the like. Aliphatic hydrocarbon solvents are illustrated hexane, cyclohexane, isooctano, and the like. Aromatic hydrocarbon solvents are illustrated by toluene, xylene, ethylbenzene, and the like. An especially preferred solvent is dichloromethane.

As noted, in the third step according to the method of the present disclosure used in the preparation of carboxy-terminated polyarylates, a reaction mixture comprising a stoichiometric excess of at least one dicarboxylic acid dichloride (diacid chloride) and the dihydroxy-substituted aromatic hydrocarbon are reacted in the presence of an organic base and least one inert organic solvent. There is also present in the reaction mixture an amount of water sufficient to produce a polyarylate comprising at least one anhydride linkage. The water may be added deliberately or in some instances simple be adventitious (See for example Comparative Example 14 in Table 1). Typically the amount of water present during the third step is in a range between about 0.001 moles and about 1 moles of water for every mole of diacid chloride present in the reaction mixture. In one embodiment the amount of water present during the third step is in a range between about 0.01 moles and about 0.5 moles of water for every mole of diacid chloride present in the reaction mixture. In another embodiment the amount of water present during the third step is in a range between about 0.01 moles and about 0.1 moles of water for ever mole of diacid chloride present in the reaction mixture.

The diacid chlorides used according to the method of the present disclosure are principally aromatic diacid chlorides, however aliphatic diacid chlorides may also be employed. Suitable aromatic diacid chlorides are represented by monocyclic diacid chlorides, for example isophthaloyl dichloride, terephthaloyl dichloride, and mixtures of isophthaloyl and terephthaloyl dichlorides. Suitable polycyclic diacid chlorides include diphenyl dicarboxylic acid dichloride, diphenylether dicarboxylic acid dichloride, and naphthalenedicarboxylic acid dichloride. Naphthalene-2,6-dicarboxylic acid dichloride is a preferred polycyclic diacid chloride. As noted, mixtures of various diacid chlorides may be employed, for

example mixtures of monocyclic and polycyclic aromatic dicarboxylic acid dichlorides- In one embodiment the dicarboxylic acid dichloride comprises a mixture of isophthaloyl and terephthaloyl dichlorides. The use of a mixture of isophthaloyl and terephthaloyl dichlorides is conveniently represented by Formula VII.

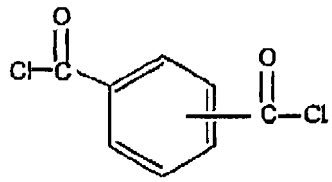

Formula (VII)

It should be noted that formula VII merely indicates that either or both of isophthaloyl and terephthaloyl dichlorides may be present. In preferred embodiments the dicarboxylic acid dichlorides comprise mixtures of isophthaloyl and terephthaloyl dichloride in a molar ratio of isophthaloyl to terephthaloyl dichloride of about 0.2-5:1 and preferably about 0.8-2.5:1. In one embodiment a triacid chloride may be included in the preparation of the carboxy-terminated polyarylate, wherein the carboxy-terminated polyarylate includes a branched structure. Typically the triacid chloride is used in an amount corresponding to between about 0.00001 moles and about 0.03 moles per mole of diacid chloride employed. Triacid chlorides are illustrated by 2, 3, 5-benzenetricarboxylic acid trichloride and the like. It should be noted that branched cacboxy-terminated polyarylates are also obtained if a polyol having three or more OH groups is included in the reaction mixture formed in the third step (step c) described above. Suitable polyols which may be used as branching agents include 1, 3, 5-trihydroxybenzene, 1, 1, 1,-tris(4-hydroxyphenyl)ethane, and the like.

In one embodiment the present disclosure provides a novel method for preparing a carboxy-terminated polyarylate wherein said carboxy-terminated polyarylate comprises structural units derived from at least one diol having structure IV and at least one aromatic diacid chloride, said carboxy-terminated polyarylate further comprising structural units ("chain members") derived from aliphatic dicarboxylic acids and/or aliphatic diols. Structural units derived from aliphatic dicarboxylic acids and/or aliphatic diols are referred to herein as "soft-block" segments or simply "soft blocks".

The term "soft-block" as used herein, indicates that some segments of these particular polymers are made from non-aromatic monomer units. Such non-aromatic monomer units are generally aliphatic and are known to impart flexibility to the soft-block-containing polymers. In one embodiment, a carboxy-terminated polyarylate may be prepared using the method of the present disclosure said carboxy-terminated polyarylate comprising structural units represented by formulae (II), (III), and (VIII):

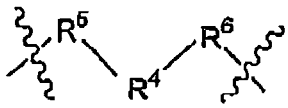

Formula (VIII)

wherein $R_4$ is a $C_2$-$C_{10000}$ aliphatic radical, or a $C_4$-$C_{20}$ cycloaliphatic radical and $R^5$ and $R^6$ each independently represent a bond,

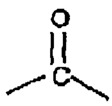 or $-CH_2-O-$,

wherein the first (on left) of the two structures indicated represents a carbonyl group with two open positions (valences) for bond formation, and the second (on right) of the two structures represents an oxymethylene group with two open positions for bond formation. In various embodiments $R^4$ is a $C_{2-20}$ straight chain alkylene radical, $C_{3-10}$ branched alkylene radical, $C_{4-10}$ cycloalkylene radical, or a $C_7C_{20}$ bicycloalkylene radical. Still other embodiments provide a composition wherein $R^4$ represents $C_{3-10}$ straight-chain alkylene or $C_6$-cycloalkylene. In one embodiment $R^4$ represents a polysiloxane-containing moiety, for example $-CH_2CH_2(OSiMe_2)_{10}CH_2CH_2-$. In another embodiment $R^4$ is a polylactone moiety. In yet another embodiment, $R^4$ comprises structural units having formula (IX):

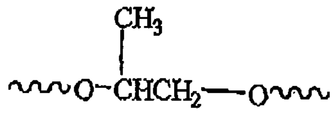

Formula (IX)

as in the case where the soft block comprises a polypropylene oxide residue. In still yet another embodiment, $R^4$ comprises structural units having formula (X):

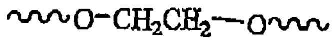

Formula (X)

as in the case where the soft block comprises a polyethylene oxide residue. In various embodiments of carboxy-terminated polyarylates containing soft-block chain members, n in formula (II) is zero.

As noted, in one embodiment the soft block is derived from a diol derived from a polylactone. For example, the soft bock may comprise a hydroxy-terminated polylactone, for example polycaprolactone diol.

The concentration of the soft block units in the polyarylate chain is typically in a range between about 0.01 % to about 70%, more preferably about 0.1 % to about 20% and most preferably about 0.1 % to about 10% by weight of the total weight of the carboxy-terminated polyarylate. In embodiments in which a coating composition comprises a carboxy-terminated polyarylate which incorporates a soft block, the concentration of the soft block expressed as a weight percent of the total weight of the coating composition is in a range between about 0.001 and about 50 percent. Thus, in one embodiment, a coating composition comprises a carboxy-terminated polyarylate which comprises a soft block represented by formula VIII wherein the concentration of the structural unit of formula VIII expressed as a weight percentage of the total weight of the coating composition is in a range between about 0.01 and about 50 percent by weight of the total weight of the coating composition.

Typically, once the dihydroxy-substituted aromatic hydrocarbon moiety, the organic base, the inert solvent, and the dicarboxylic acid dichloride, and sufficient water to provide at least one anhydride linkage are combined to form a reaction mixture, the reaction mixture is agitated under inert atmosphere until the reaction is complete. This stage of the reaction provides as a product a polyarylate which comprises one or more anhydride linkages, said polyarylate being referred to as "the initially formed polyarylate". In one embodiment it is found advantageous to provide a nitrogen, or other inert gas atmosphere inside the reactor during the course of one or more of the first, second, third and fourth steps.

In one embodiment, 'the initially formed polyarylate" produced in the third step has structure XI

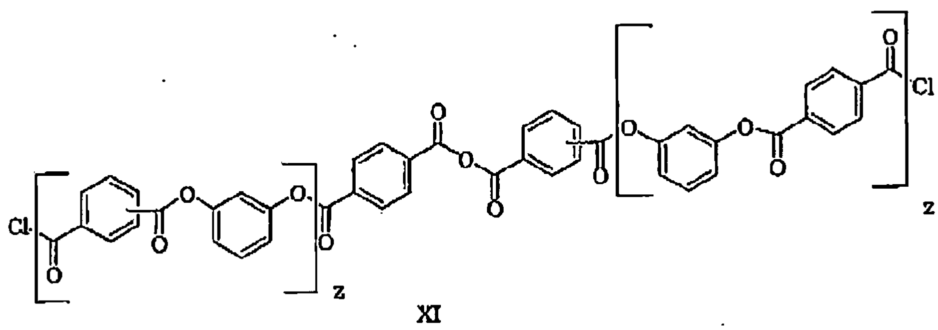

XI

wherein z has an average value of about 10, and which when subjected to the hydrolytic conditions of the fourth step affords carboxy-terminnated polyarylate having structure XII

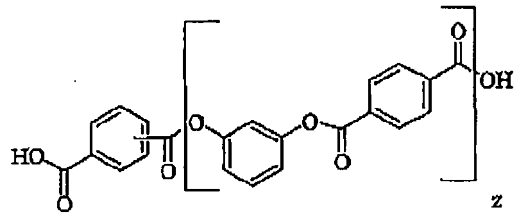

XII

wherein z is defined as in structure XI.

Typically, the hydrolytic conditions employed in the fourth step (step d) described above, comprise subjecting the polyarylate comprising at least one anhydride linkage, to contact with a large excess of water in the presence of an organic amino and inert solvent. This is typically carried out at a temperature in a range between about 0°C and about 60°C. In one embodiment of the present disclosure the hydrolytic step is carried out at a temperature in a range between about 0°C and about 40°C. In another embodiment of the present disclosure the hydrolytic step is carried out at a temperature in a range between about 15°C and about 30°C (i.e. ambient conditions).

The carboxy-terminated polyarylate may be isolated by the addition of sufficient acid to neutralize the remaining organic amine base present following the hydrolytic step. Neutralization can be effected using ether organic acids, for example trifluoroacetic acid, or inorganic acids, for example, hydrochloric acid. If the product carboxy-terminated polyarylate remains in solution in the inert solvent, the organic layer may be washed several times with water, and the product, carboxy-terminated polyarylate may be isolated by precipitation with an "antisolvent" (e.g. methanol) or the inert solvent may be removed by steam distillation or other conventional means. In some instances it is found that upon neutralization the product carboxy-terminated polyarylate precipitates. Thereafter, the product may be filtered and if need be washed or triturated to afford the carboxy-terminated polyarylate in highly pure form. Typical the product carbon-terminated polyarylate contains residual amounts of the diacid corresponding in structure to the diacid chloride. The product carboxy-terminated polyarylates may be freed from residual diacid contaminants using conventional purification means such as washing the product with dilute base and the like. When the diacid chloride employed is a mixture of iso- and terephthaloyl chloride, for example, the initially precipitated product carboxy-terminated polyarylate contains a mixture of isophthalic acid and terephthalic acid in an amount corresponding to between about 5 and about 10 weight percent based upon the total weight of the isolated polyarylate.

In order to characterize more reliably the product carboxy-terminated polyarylate, it is typically dried at elevated temperature for a period of 24 hours or so under vacuum prior to analysis by such techniques as NMR.

The carboxy-terminated polyarylate product prepared using the method described in the preceding sections may be characterized by Gel Permeation Chromatography (GPC) and Differential Scanning Calorimetry (DSC). Molecular weights determined by GPC are typically recorded as number average ($M_n$) molecular weight in grams per mole (g/mole) or weight average molecular weight ($M_w$) and are determined using polystyrene (PS) molecular weight standards. The molecular weights may also be determined by nuclear magnetic resonance (NMR). The weight average molecular weight of the carboxy-terminated polyarylate prepared by the method of the present disclosure is typically in a range between about 500 and about 14,000 grams per mole.

In one embodiment the composition of the present invention comprises a carboxy-terminated polyarylate having a weight average molecular weight in a range between about 500 and about 5000 grams per mole. In another embodiment the composition of the present invention comprises a carboxy-terminated polyarylate having a weight average molecular weight in a range between about 2000 and about 5000 grams per mole. In yet another embodiment the composition of the present invention comprises a carboxy-terminated polyarylate having a weight average molecular weight in a range between about 500 and about 2500 grams per mole.

As noted, in a primary aspect, the present invention provides a cured composition comprising components A, B and optionally C, wherein component A comprises at least one carboxy-terminated polyarylate, having structural units of formula I, component B is an organic species which can react with the terminal carboxy groups of component A, and component C is a catalyst or mixture of catalysts which promote the reaction between components A and B. Component B consists of at least one organic species having one or more functional groups which may be the same or different, said functional groups being chemically reactive with the terminal carboxy groups of the polyarylate of component A.

The functional groups of component B are selected from the group consisting of isocyanates, epoxides, aliphatic esters, hydroxy groups and aromatic esters. In one embodiment, component B comprises an aliphatic polyisocyanate. In an alternate embodiment, component B comprises IPDI-Trimer (isocyanurate of isophorone diisocyanate, commercially known as VESTANAT T 1890). In yet another embodiment component B comprises one or more "blocked isocyanates". A blocked isocyanate refers to a molecule which possesses at least one latent isocyanate functional group. For example, carbamates comprise one or more latent isocyanate: groups. Typically upon heating, a carbamate fragments

to form an alcohol and an isocyanate. An example of a blocked isocyanate is given here not by way of limitation but merely to further clarify the nature and meaning of the term blocked isocyanate. Thus, $PhOCONH(CH_2)_6NHCOOPh$, the carbamate formed by reaction of 2 moles phenol with 1 mole of 1,10-hexamethylenediiosocyanate, represents a "blocked isocyanate" which upon heating fragments to the starting phenol and diisocyanate, Various forms of blocked isocyanates are well known in the art. In another embodiment component B comprises epoxy resin precursor a polyglycidyl. In one embodiment component B comprises BPA diglycidyl ether (commercially known as EPON Resin 2002). Typically, the concentration of component B in the disclosed coating composition is in a range between about 1 and about 99 percent by weight of the total weight of the coating composition.

As noted, the cured composition may comprise a component C, a catalyst to promote the reaction between component A and component B. The presence or absence of component C is optional. Typically, the catalyst is selected from the group consisting of tertiary amines, quaternary ammonium salts, quaternary phosphonium salts, Lewis acids, and mixtuxes thereof. Typically, component C is present in an amount corresponding to between about 0.00001 and about 10 percent by weight of total weight the composition. In one embodiment benzyl trimethylammonium bromide (BTMAB) may be used as a catalyst.

The cured compositions of the present invention may contain one or more co-resins. The term "co-resin" is used to designate a polymeric species which does not fall within the class of materials belonging to the "organic species" of component B because the co-resin does not possess functional groups capable of reaction with the terminal carboxy groups of component A under conditions typically used for the formation of a coating. The co-resin may have either high or low molecular weight as defined herein. A high molecular weight co-resin is defined as having a weight average molecular weight of at least 15,000 grams per mole. A low molecular weight co-resin is defined as having a weight average molecular weight of less than 15,000 grams per mole. Polymers which are especially well suited for use as co-resins include polycarbonates, polyesters, polyetherimides, polyphenylene ethers, addition polymers and the like. Polyesters are illustrated by poly(alkylene arenedioates), especially poly(ethylene terephthalate) (hereinafter sometimes designated "PET"), poly(1,4- butylene terephthalate) (hereinafter sometimes designated "PBT"), poly(trimethylene terephthalate) (hereinafter sometimes designated "PTT"), poly(ethylene naphthalate) (hereinafter sometimes designated "PEN"), poly(butylene naphthalate) (hereinafter sometimes designated "PBN"), poly(cyclohexanedimethanol terephtalate), poly(cyclohexanedimethanol-co- ethylene terephthalate) (hereinafter sometimes designated "PETG"), and poly (1,4-cyclohexanedimethyl-1,4-cyclohexanedicarboxylate) (hereinafter sometimes, designated "PCCD"). The poly (alkylene arenedioates), poly(ethylene terephthalate) and poly(1,4-butylene terephthalate) are especially preferred in certain coating applications. Suitable addition polymers include homopolymers and copolymers, especially homopolymers of alkenylaromatic compounds, such as polystyrene, including syndiotactic polystyrene, and copolymers of alkenylaromatic compounds with ethylenically unsaturated nitriles, such as acrylonitrile and methacrylonitrile; dienes, such as butadiene and isoprene; and/or acrylic monomers, such as ethyl acrylate. These latter copolymers include the ABS (acrylonitrile-butadiene-styrene) and ASA (acrylonitrile-styrene- alkyl acryl ate) copolymers. Addition polymers as used herein include polyacrylate homopolymers and copolymers including polymers comprising methacrylate-derived structural units.

The compositions disclosed herein may further comprise art-recognized additives including organic and inorganic pigments, dyes, impact modifiers, UV screeners, hindered amine light stabilizers, degassing agents, viscosity modifying agents, corrosion inhibitors, surface tension modifiers, surfactants, flame retardants, organic and inorganic fillers, stabilizers, and flow aids.

The compositions disclosed herein may be prepared through several routes. In some embodiments, the compositions may be prepared using an organic solvent base or water base. The compositions may also be prepared through a route, which is substantially solvent free, for example, in the form of a solid power composition.

In one aspect the compositions of the present invention are useful as coating compositions. In some instances in which the compositions of the present invention are embodied in coating compositions, the compositions may include one or more solvents. The solvent-containing compositions comprising a polyarylate of formula I may be prepared and a coating prepared through solution coating followed by evaporation and curing of the components A and B of the composition. Optionally, the components of the composition may be cured or partially cured prior to dissolution in a solvent. The terms "cure", and "curing" refer to the reaction between the components comprised by the composition, said reaction optionally being assisted by one or more catalysts (optional component C). The solvent-containing compositions may be prepared using suitable solvents for solvent casting. Typically dimethylacetamide and tetrahydrofuran or a mixture thereof are preferred solvents. However other co-solvents, such as amides (dimethylformamide, methyl pyrolidone, etc), esters (ethyl acetate, butyl acetate, etc), ketones (acetone, methyl ethyl ketone, methyl iso-butyl ketone, etc), alcohols (methanol, ethanol, etc.) aromatics (toluene, xylene, etc.), halogenated solvents (dichloromethane, chloroform, etc.) and mixtures thereof may also be employed. The solutions of the coating compositions for solvent casting should be mixed thoroughly prior to film casting onto a substrate. In certain embodiments the composition of the present invention may be employed as a dispersion in water. Typically, the composition dispersed in water is deposited on a substrate, water removal is effected, end then the composition is cured to afford a coated substrate. Such water-borne

coating compositions (formulations) may be used to prepare a variety of coated articles.

Compositions comprising at least one polyarylate possessing structural units having formula I possess particularly advantageous physical properties for use in powder coatings when the polyarylate possessing structural units having formula I is an oligomeric polyarylate. As noted, polyarylates prepared using the novel synthetic procedure disclosed herein typically have low molecular weights. It should be noted, that the novel process described in detail in preceding sections of this document may be used to prepare oligomeric polyarylates which are in some instances crystalline oligomeric polyarylates. In this respect, performance of dry powder coating formulations comprising oligomeric polyarylates may be enhanced when the polyarylates are in an amorphous rather than crystalline form. Thus in one embodiment, a crystalline oligomeric polyarylate is converted into an amorphous form for use in a coating formulation according to the present invention. In one embodiment, in order to suppress crystallinity, a crystalline oligomeric polyarylate is melt extruded in an extruder thereby producing an amorphous form of the oligomeric polyarylate.

Typically, the components of the powder coating compositions are ground to a powder for dry blending, dry blended to produce a blend. After dry blending, the blend is extruded, ground and sieved to prepare the powder coating formulation, which may be electrostatically deposited on the substrate to be coated to produce a coated substrate. Alternatively, the coating formulation may be "solvent cast", or applied as a dispersion in water on a substrate to produce a coated substrate. The coated substrate may then be cured at a particular temperature for a certain time, or the coated substrate may be subjected to curing under a "cure profile" in which the cure conditions such as temperature, time and the like are varied during the curing process. The properties exhibited by the coating depend on the curing conditions. The optimum curing temperature and time ranges may be determined using the conditions disclosed herein or alternatively curing conditions may be arrived at by screening a modest number of different curing conditions.

The coatings prepared from the compositions disclosed herein have outstanding physical properties which include chemical resistance, hardness, toughness and weatherability. The chemical resistance, hardness, toughness and weatherability of the coatings prepared using the compositions disclosed herein are in many instances superior to coatings prepared using known coating formulations. In one aspect, the coatings prepared from the compositions of the present invention show enhanced photostability. Thus, when exposed to UV light, the polyarylate component of the subject coatings undergo photo-Fries reaction to generate hydroxybenzophenone structural units which serve to protect the coating from further photochemical reaction and degradation. The hydroxybenzophenone photoproducts effectively absorb light in the "near UV" range of the spectrum and enhanced photostability is conferred upon the coating thereby. In this manner it is believed that the coatings prepared using the compositions of the present invention produce coatings which exhibit enhanced more robust weatherability and increased toughness.

In another embodiments, the present invention comprises coated articles comprising a substrate layer comprising at least one thermoplastic polymer, thermoset polymer, cellulosic material, glass, ceramic, or metal, and at least one cured coating layer thereon, said coating layer prepared using the cured compositions of the instant invention, said coating layer comprising structural units having formula I. Optionally, the coated articles may further comprises an interlayer, for example an adhesive interlayer, between any substrate layer and any thermally stable polymer coating layer. Coated articles of the invention include, but are not limited to, those which comprise a substrate layer and a coating layer comprising oligomeric polyarylate; those which comprise a substrate layer with a coating layer comprising oligomeric polyarylate on each side of said substrate layer; and those which comprise a substrate layer and at least one coating layer comprising oligomeric polyarylate with at least one interlayer between a substrate layer and a coating layer.

The coated articles produced using the cured compositions of the present invention typically have outstanding initial gloss, improved initial color, weatherability, impact strength, and resistance to organic solvents encountered in their final applications.

The material of the substrate layer in the articles of this invention may be at least one thermoplastic polymer, whether addition or condensation prepared. Condensation polymers include, but are not limited to, polycarbonates, particularly aromatic polycarbonates, polyphenylene ethers, polyetherimides, polyesters (other than those employed for the coating layer, as defined hereinafter), and polyamides. Polycarbonates and polyesters are frequently preferred.

Polyester substrates include, but are not limited to, poly(ethylene terephthalate), poly(1,4-butylene terephthalate), poly(trimethylene terephthalate), poly(ethylene naphthalate), poly(butylene naphthalate), poly(cyclohexanedimethanol terephthalate), poly(cyclohexanedimethanol-co- ethylene terephthalate), and poly(1,4-cyclohexanedimethyl-1,4-cyclohexanedicarboxylate).

Suitable addition polymer substrates include homo- and copolymeric aliphatic olefin and functionalized olefin polymers such as polyethylene, polypropylene, poly(vinyl chloride), poly(vinyl chloride-co-vinylidene chloride), poly(vinyl fluoride), poly(vinylidene fluoride), poly(vinyl acetate), poly(vinyl alcohol), poly(vinyl butyral), poly(acrylonitrile), acrylic polymers such as those of (meth)acrylamides or of alkyl (meth)acrylates such as poly(methyl methacrylate) ("PMMA"), and polymers of alkenylaromatic compounds such as polystyrenes, including syndiotactic polystyrene. The preferred addition polymers for many purposes are polystyrenes and especially the so-called ABS and ASA copolymers, which may contain thermoplastic, non-elastomeric styrene-acrylonitrile side chains grafted on an elastomeric base polymer of butadiene and alkyl acrylate, respectively.

Blends of any of the foregoing polymers may also be employed as substrates. Typical blends include, but are not limited to, those comprising PC/ABS, PC/ASA, PC/PBT, PC/PET, PC/polyetherimide, PC/polysulfone, polyester/polyetherimide, PMMA/acrylic rubber, polyphenylene ether-polystyrene, polyphenylene ether-polyamide or polyphenylene ether-polyester. Although the substrate layer may incorporate other thermoplastic polymers, the above-described polycarbonates and/or addition polymers still more preferably constitute the major proportion thereof.

The substrate layer in the coated articles of this invention may also comprise at least one of any thermoset polymer. Suitable thermoset polymer substrates include, but are not limited to, those derived from epoxies, cyanate esters, unsaturated polyesters, diallylphthalate, acrylics, alkyds, phenol-formaldehyde, novolacs, resoles, bismaleimides, PMR resins, melamine-formaldehyde, ureaformaldehyde, benzocyclobutanes, hydroxymethylfurans, and isocyanates. In one embodiment of the invention the thermoset polymer substrate further comprises at least one thermoplastic polymer, such as, but not limited to, polyphenylene ether, polyphenylene sulfide, polysulfone, polyetherimide, or polyester. Said thermoplastic polymer is typically combined with thermoset monomer mixture before curing of said thermoset. In one embodiment, the substrate layer comprises a layer of paint, such as a urethane-comprising paint or a melamine-based paint.

In one embodiment of the invention a thermoplastic or thermoset substrate layer also incorporates at least one filler and/or pigment. Illustrative extending and reinforcing fillers, and pigments include silicates, zeolites, titanium dioxide, stone powder, glass fibers or spheres, carbon fibers, carbon black, graphite, calcium carbonate, talc, mica, lithopone, zinc oxide, zirconium silicate, iron oxides, diatomaceous earth, calcium carbonate, magnesium oxide, chromic oxide, zirconium oxide, aluminum oxide, crushed quartz, calcined clay, talc, kaolin, asbestos, cellulose, wood flour, cork, cotton and synthetic textile fibers, especially reinforcing fillers such as glass fibers and carbon fibers, as well as colorants such as metal flakes, glass flakes and beads, ceramic particles, other polymer particles, dyes and pigments which may be organic, inorganic or organometallic. In another embodiment the invention encompasses coated articles comprising a filled thermoset substrate layer such as a sheet-molding compound (SMC).

The substrate layer may also comprise at least one cellulosic material including, but not limited to, wood, paper, cardboard, fiber board, particle board, plywood, construction paper, Kraft paper, cellulose nitrate, cellulose acetate butyrate, and like cellulosic-containing materials. The invention also encompasses blends of at least one cellulosic material and either at least one thermoset polymer (particularly an adhesive thermoset polymer), or at least one thermoplastic polymer (particularly a recycled thermoplastic polymer, such as PET or polycarbonate), or a mixture of at least one thermoset polymer and at least one thermoplastic polymer.

Coated articles encompassed by the invention also include those comprising at least one glass layer. Typically any glass layer is a substrate layer, although coated articles comprising a thermally stable polymer coating layer interposed between a glass layer and a substrate layer are also contemplated. Depending upon the nature of coating and glass layers, at least one adhesive interlayer may be beneficially employed between any glass layer and any thermally stable polymer coating layer. The adhesive interlayer may be transparent, opaque or translucent. For many applications it is preferred that the interlayer be optically transparent in nature and generally have a transmission of greater than about 60% and a haze value less than about 3% with no objectionable color.

Metal articles exposed to the environment may exhibit tarnishing, corrosion, or other detrimental phenomena. Therefore, in another embodiment the invention encompasses coated articles comprising at least one metal layer as substrate layer. Representative metal substrates include those comprising steel, aluminum, brass, copper, and other metals or metal-containing articles, which may require protection from the environment. Depending upon the nature of coating and metal layers, at least one adhesive interlayer may be beneficially employed between any metal layer and any thermally stable polymer coating layer.

The articles of this invention are characterized by the usual beneficial properties of the substrate layer, in addition to weatherability as evidenced by improved resistance to ultraviolet radiation and maintenance of gloss, and solvent resistance.

Coated articles which can be made which comprise thermally stable polymers comprising resorcinol arylate polyester chain members include automotive, truck, military vehicle, and motorcycle exterior and interior components, including panels, quarter panels, rocker panels, trim, fenders, doors, decklids, trunklids, hoods, bonnets, roofs, bumpers, fascia, grilles, mirror housings, pillar appliques, cladding body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, roofs, windows, floors, decorative window furnishings or treatments; aluminum extrusions and facades; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim;

sports equipment and toys; enclosures, housings, panels, and parts for snowmobiles; recreational vehicle panels and components; playground equipment; articles made from plastic-wood combinations; golf course markers; utility pit covers; computer housings; desktop computer housings; portable computer housings; lap-top computer housings; palm-held computer housings; monitor housings; printer housings; keyboards; FAX machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles; coated dyed articles; coated fluorescent articles; coated foam articles; and like applications. The disclosure further contemplates additional fabrication operations on said articles, such as, but not limited to, moulding, in-mold decoration, baking in a paint oven, lamination, and/or thermoforming.

As noted, in one aspect the present disclosure provides anhydride-containing polyarylates which may be converted via hydrolysis into novel carboxy-terminated polyarylato compositions. The novel anhydride-containing polyarylate compositions of the present invention typically comprise between about 0.01 and about 15, preferably between about 0.1 and 10, and still more preferably between about 1 and about 10 weight percent anhydride moieties based on the weight of the anhydride-containing polyarylate. The following calculations illustrate this concept for a polyarylate consisting of structural units derived from iso- and terephthalic acid moieties and resorcinol. In such a case the amount of anhydride linkages is calculated as shown below:

Formula Weight (FW) of anhydride linkage (3x 16) + 2x 12 = 72gram/mole

Formula Weight of polyarylate repeat unit = 241 gram/mole

For an oligomeric polyarylate having 3-20 polyarylate repeat units (i.e. trimer-eicosamer) and a single anhydride linkage the anhydride content expressed as a weight percent of the polyarylate component is:

%weight of anhydride =72/(3x241)x100 = 11% (trimer)

%weight of anhydride=72/(4x241)x100 = 7.5% (tetramer)

%weight of anhydride= 72/(5x241)x100 = 6% (pentamer)

%weight of anhydride= 72/(10x241)x100 = 3% (decamer)

%weight of anhydride=72/(20x241)x100 = 1.5 (eicosamer)

In one embodiment the anhydride-containing polyarylate comprises structural units having formula I and has a weight average molecular weight ($M_w$) of less than about 10000 grams per mole. In an alternate embodiment the anhydride-containing polyarylate comprises structural units having formula I and has a weight average molecular weight ($M_w$) of less than about 5000 grams per mole. In yet another embodiment the anhydride-containing polyarylate comprises structural units having formula I and has a weight average molecular weight <$M_w$) of less than about 2500 grams per mole.

In a further aspect, the present invention provides a cured composition comprising components A, B, and optionally C wherein component A comprises a functionalized polyarylate which comprises reactive functional groups, component B comprising at least one "organic species" comprising one or more functional groups which are reactive with the functional groups of the funotionalized polyarylate, and optionally component C which is one or more catalysts which promote the reaction between the reactive functional groups of the functionalized polyarylate of component A with the funcctional groups of the organic species of component B. Each of components A-C is discussed in turn below.

In this further aspect of the present invention, Component A comprises at least one functionalized polyarylate which may be linear or branched, said polyarylate comprising structural units having formula I, said polyarylate further

comprising reactive endgroups selected from the group consisting of epoxide groups, thioepoxide groups, aliphatic hydroxy groups, aldehyde groups, acetal groups, ketal groups, thioacetal groups, thioketal groups, ketone groups, thioketone groups, nitrile groups, isonitrile groups, amide groups, amino groups, azide groups, hydrazine groups, azo groups, thiol groups, selenol groups, disulfide groups, diselenide groups, silyl ether groups, silyl ester groups, silane groups, olefin groups, activated olefin groups, urethane groups, acylurethane groups, haloarene groups, nitroarene groups, oxide groups, aliphatic nitro groups, thiourea groups, lactone groups, guanidine groups, and amidine groups.

Component B comprises at least one organic species comprising one or more functional groups, said functional groups being chemically reactive with the reactive endgroups of the functionalized polyarylate of component A. The nature of the functional groups present in component B is typically complementary in chemical reactivity with respect to the functional groups present in the functionalized polyarylate of component A. The functional groups of the organic species of component B are selected from the group consisting of isocyanate groups, epoxide groups ester groups, and hydroxy group, provided that at least some of the functional groups present in the organic species of component B are reactive with at least some of the functional groups of the functionalized polyarylate of component A. This affinity between the functional groups of the functionalized polyarylate of component A and the functional groups of the organic species of component B is sometimes referred to as "complementary reactivity". The organic species of component B includes the specific embodiments presented earlier in this application,

Component C, as noted, is optional and comprises one or more catalysts which promote chemical reaction between the functionalized polyarylate of component A and the organic species of component B. Examples given previously for component C are suitable for use in these further aspects of the invention.

In yet another further aspect, the present invention provides a cured composition comprising structural groups derived from components A, B, and optionally C wherein component A is a functionalized linear or branched polyarylate,

The present disclosure further provides a method of making linear and branched functionalized polyarylates comprising reactive endgroups, The method comprises the steps (a), (b) and (c):

Step (a) At least one dihydroxy-substituted aromatic moiety, and optionally a branching agent, and optionally one or more dihydroxy-substituted aliphatic moieties, and at least one organic base are combined in an inert organic solvent to form a mixture, wherein the dihydroxy-substituted aromatic moiety is substantially soluble in the mixture, and wherein the dihydroxy-substituted aromatic moiety and the optional dihydroxy-substituted aliphatic moiety are used in a molar amount.

Step (b) The mixture formed in step (a) is combined with at least one dicarboxylic acid dichloride in a molar amount such that the molar amount of the dihydroxy-substituted aromatic moiety and optional dihydroxy-substituted aliphatic moiety in the mixture is stoichiometrically deficient relative to the molar amount of said at least one dicarboxylic acid dichloride, to provide an intermediate polyarylate comprising chlorocarbonyl end groups. A branching agent, for example; 1, 3, 5 benzenetricarboxylic acid trichloride, may also be employed in step (b) in addition to any branching agent employed in step (a) or as an alternative to the use of a branching agent in step (a).

Step (c) The polyarylate comprising chlorocarbonyl end groups formed in step (b) is then subjected to a functionalization step to provide a product functionalized polyarylate comprising reactive endgroups. The functionalized polyarylate may be linear (if no branching agent is employed in steps (a) and (b)). Alternatively, the functionalized polyarylate may be branched (as in the case where a branching agent is employed in either or both of steps (a) and (b). The functionalization step may be carried out, for example, by reacting the intermediate polyarylate comprising chlorocarbonyl endgroups with at least one functionalizing agent, said functionalizing agent comprising a first functional group which reacts with said chlorocarbonyl group under the conditions of the functionalization step, and a second functional group, wherein the second functional group comprises the reactive endgroups of the product functionalized polyarylate. Alternatively the functionalization step may be carried out by reacting the intermediate polyarylate comprising chlorocarbonyl endgroups with an amount of water sufficient to produce an intermediate polyarylate comprising at least one anhydride linkage, and subsequently reacting the intermediate polyarylate comprising at least one anhydride linkage with at least one functionalizing agent, said functionalizing agent comprising a first functional group which reacts with said anhydride linkage, and a second functional group, wherein the second functional group comprises the reactive endgroups of the product functionalized polyarylate.

The first functional group present in the functionalizing agent used in step (c) can be any group capable of reacting with the chlorocarbonyl group of the polyarylate. In an embodiment, the first functional group is selected from the group consisting of groups comprising nucelophilic oxygen, groups comprising nucelophilic nitrogen, groups comprising nucelophilic sulfur, and groups comprising nucelophilic selenium. The simplest example of a group comprising nucelophilic oxygen is water wherein one of the two O-H bonds present represents the "first functional group" and the other of the two O-H bonds represents the "second functional group". Hydrogen sulfide ($H_2S$) and hydrogen selenide

($H_2Se$) are related examples.

The second functional group of the functionalizing agent is selected from the group consisting of carboxyl groups, hydroxyl groups, epoxides, thioepoxides, aldehyde groups, acetal groups, ketal groups, thioacetal groups, thioketal groups, ketone groups, thioketone groups, nitrile groups, isonitrile groups, amide groups, amine groups, azide groups, hydrazine groups, azo groups, thiol groups, selenol groups (HSe-, also referred to as hydroselenyl groups)), disulfide groups, diselenide groups, silyl ether groups, silyl ester groups, silane groups, olefin groups, activated olefin groups, urethane groups, acylurethane groups, haloarene groups, nitroarene groups, oxime groups, aliphatic nitro groups, thiourea groups, lactone groups, guanidine groups, and amidine groups. Non-limiting examples of the functionalizing agent include glycidyl alcohol, ethylene glycol, hydroxyethyl acrylate, 2-mercaptoethylamine (i.e. $HSCH_2CH_2NH_2$), 2-hydroselenylethylamine (i.e. $HSeCH_2\ CH_2NH_2$ , thiosemicarbazide, semicarbazide, 2-hydroxyacetaldehyde, glutamic acid, and 4-hydroxynitrobutane, ethanolamine, diethanolamine, glycine and other amino acids, glutamic acid, hydroxybenzoic acid, salicylic acid, lactic acid, hydroxycaproic acid, and amino caproic acid. Functionalizing agents such as glutamic acid are valuable for preparing reactive functionalized polyarylates since the 2 carboxylic acid groups comprised by the glutamic can be further elaborated for various end-use applications, such as solution coatings and powder coatings. Those skilled in the art will understand that the second functional groups present in the functionalized polyarylate may be further transformed into a wide variety of additional functional groups. For example, epoxide groups are readily transformed into alcohols (via ring opening), thioepoxides (via reaction with KSCN), and olefins (via reaction with phosphines). Azido groups ($N_3$--) are transformed via the Staudinger reaction to an azaphosphorane ($Ph_3P$=N--), a group prized for its chemical versatility, via reaction with triphenyl phosphine. Those skilled in the art will recognize the rich potential for transformation presented by the functional groups present in the functionalized polyarylate.

Suitable branching agents for use in the preparation of functionalized polyarylates which are branched include trifunctional or higher functional carboxylic acid chlorides, and/or trifunctional or higher functional phenols, and/or trifunctional or higher functional chloroformates. Such branching agents, if included, can be used in various embodiments in quantities of 0.005 to 20 mole %, based on acid chlorides or dihydroxy-substituted aromatic hydrocarbon moieties used, respectively. In an alternate embodiment, such branching agents can be used in quantities of 0.005 to 1 mole %, based on acid chlorides or dihydroxy-substituted aromatic hydrocarbon moieties used. Suitable branching agents are exemplified by trifunctional or higher carboxylic acid chlorides, such as trimesic acid trichloride, cyanuric acid trichloride, 3,3',4,4'-benzophenone tetracarboxylic acid tetrachloride, 1,4,5,8-naphthalene tetracarboxylic acid tetrachloride or pyromellitic acid tetrachloride, and trifunctional or higher phenols, such as phloroglucinol, 4,6-dimethyl-2,4,6-tri-(4-hydroxyphenyl)-2-heptene, 4,6-dimethyl-2,4,6-tri-(4-hydroxyphenyl)-heptane-, 1,3,5-tri-(4-hydroxyphenyl)-benzene, 1,1,1-tri-(4-hydroxyphenyl)-ethane, tri-(4-hydroxyphenyl)-phenyl methane, 2,2-bis-[4,4-bis-(4-hydroxyphenyl)-cyclohoxyl]-propane, 2,4-bis-(4-hydroxyphenylisopropyl)-phenol, tetra-(4-hydroxyphenyl)-methane, 2,6-bis-(2-hydroxy-5-methylbenzyl)-4-methyl phenol, 2-(4-hydroxyphenyl)-2-(2,4-dihydroxyphenyl)-propane, tetra-(4-[4-hydroxyphenylisopropyl]-phenoxy)-methane, 1,4-bis-[(4,4-dihydroxytriphenyl)methyl]-benzene. As noted, in various embodiments phenolic branching agents may be introduced first with the dihydroxy-substituted aromatic hydrocarbon moieties or during the course of acid chloride addition, whilst acid chloride branching agents may be introduced together with acid dichlorides.

The functionalized polyarylates of the present disclosure may be of widely varying molecular weights and may be either "oligomeric, (i.e. "low molecular weight") meaning the functionalized polyarylate has a weight average molecular weight ($M_w$) of 15,000 grams per mole or less, or high molecular weight ($M_w > 15{,}000$ grams per mole). In one embodiment, the functionalized polyarylate has a weight average molecular weight in a range from about 2000 grams per mole to about 15,000 grams per mole. In another embodiment, the functionalized polyarylate has a weight average molecular weight in a range from about 500 grams per mole to about 10,000 grams per mole.

As with the carboxy-terminated polyarylates, the functionalized polyarylates, provided by the present disclosure may be amorphous or crystalline,

In another further aspect, the present disclosure provides an article comprising a cured composition, the cured composition comprising structural units derived from components A, B and C, wherein component A comprises a functionalized polyarylate comprising structural units I, and wherein said functionalized polyarylate may be linear or branched. For example the article provided by the present invention may comprise a substrate layer and at least one cured coating layer disposed thereon, wherein the coating is prepared from a composition comprising components A, B, and C. The substrate layer typically comprises at least one material selected from the group consisting of thermoplastic polymers, thermoset polymers, glass, metal, mineral-based materials such as concrete, and cellulosic materials such as paper.

In yet another further aspect, the present disclosure provides a functionalized polyarylate comprising structural units having formula I, said functionalized polyarylate being linear or branched, said functionalized polyarylate further comprising at least one reactive endgroup selected from the group consisting of carboxy groups, epoxide groups, thioepoxide groups, aliphatic hydroxy groups, aldehyde groups, acetal groups, ketal groups, thioacetal groups, thioketal groups, ketone groups, thioketone groups, nitrile groups, isonitrile groups, amide groups, amine groups, azide groups, hydrazine groups, azo- groups, thiol groups, selenol groups, disulfide groups, diselenide groups, silyl ether groups, silyl ester groups, silane groups, olefin groups, activated olefin groups, urethane groups, acylurethane groups, haloarene

groups, nitroarene groups, oxime groups, aliphatic nitro groups, thiourea groups, lactone groups, guanidine groups, and amidine groups.

The intermediate polyarylate comprising chlorocarbonyl end groups can be prepared in accordance with the procedures discussed earlier in the present disclosure.

A functionalized polyarylate comprising epoxy end groups in the form of glycidyl ester groups is illustrated by polyarylate XIII,

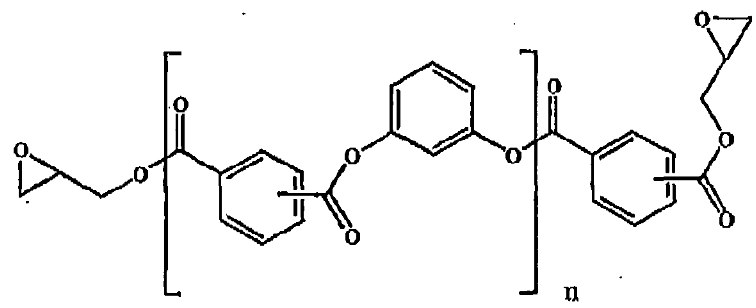

(XIII)

wherein "n" has a value such that the weight average molecular weight of the functionalized polyarylate in a range from about 500 grams per mole to about 15,000 grams per mole as measured by GPC using polystyrene molecular weight standards.

In an alternate embodiment, functionalized polyarylates such as those having formula XIII may also be prepared by reacting concurrently, the dihydroxy-substituted aromatic moiety, such as resorcinol, and a functionalizing agent, such as glycidol with the dicarboxylic acid dichloride.

Those skilled in the art will understand that in addition to the teachings directed to these further embodiments, the teachings contained herein applicable to compositions comprising as components A, B and optionally C wherein component A comprises a carboxy-terminated polyarylate, will be generally applicable to compositions comprising components A, B and C wherein component A comprises a "functionalized polyarylate". The "teachings" referred to include the compositions themselves, uses of said compositions (e.g. solvent-borne coatings, and powder coatings), co-resins suitable for use with said compositions, methods of making said compositions, curing conditions, articles prepared from said compositions, and additives for the enhancement of performance of said compositions disclosed with respect to carboxy-terminated polyarylates.

EXAMPLES

The following examples are set forth to provide those of ordinary skill in the art with a detailed description of how the methods claimed herein are carried out and evaluated, and are not intended to limit the scope of what the inventors regard as their invention. Unless indicated otherwise, parts are by weight, temperature is in °C.

Molecular weights are reported as weight average ($M_w$) molecular weight in grams per mole (g/mole) and were determined by gel permeation chromatography (GPC) using polystyrene (PS) molecular weight standards. Glass Transition Temperatures (Tg) of oligomeric polyarylates were measured by differential scanning calorimetry (DSC).

Chemical resistance of the coating was tested by methyl ethyl ketone (MEK) "double rub" technique. After curing, the coated substrates were allowed to cool to room temperature and remained under ambient conditions for at least 15 hours before being subjected to the methyl ethyl ketone (MEK) double rub or impact tests. MEK double rub tests (MEK DR) were performed under ambient conditions using a two-pound ballpein hammer as weight. The rounded head of the hammer was wrapped in six-layers of grade 10 cheesecloth and soaked with methyl ethyl ketone. The rounded head of the hammer was then placed on the coating and manually moved back and forth across the coating under its own weight. Each back and forth stroke was counted as 1 double rub. When the substrate became exposed the test was ended and the number of double rubs until substrate exposure was recorded. In cases in which the substrate did not become exposed, the tests were terminated after 200 double rubs. Thus, the actual number of MEK double rubs required to effect exposure of the substrate may be higher than the value of 200 recorded.

Impact tests were performed under ambient conditions using a slight variation of ASTM D5420 -98a. using a Gardner Impact Tester. Direct Impact ("DI") values were recorded when the indentation test was carried out on the coated surface of the test part. Indirect Impact ("II") values were recorded when the indentation test was carried out on the uncoated surface of the substrate. Only steel panels were used to determine the impact measurements.

The methods employed to synthesize carboxy-terminated polyarylates comprising structural units having formula I are described herein.

In previous studies, oligomeric hydroxy-terminated polyarylates comprising structural units having formula I, referred to for convenience sake as "hydmxy-terminated ITR oligomers", were synthesized and shown to be useful in coatings applications. In the earlier work, it was found that control of the molecular weight of the product hydroxy-terminated polyarylate presented a major hurdle which had to be overcome in order to be able to prepare the relatively low molecular weight hydroxy-terminated ITR oligomers required for certain applications such as coatings. Additionally, it was earlier discovered that the uncontrolled formation of anhydride linkages during the preparation of product hydroxy-terminated polyarylates reduced the utility of said product hydroxy-terminated polyarylates owing to the instability of the anhydride linkages relative to ester linkages present in the polyarylates.

In the present disclosure, it has been discovered that oligomeric carboxy-terminated polyarylates may be prepared under certain reaction conditions which promote both the formation of anhydride linkages and their subsequent hydrolysis to terminal carboxy groups. The molecular weights of these "acid capped ITR oligomers" may be controlled by exercise of control of the relative amounts of resorcinol, diacid chloride, and water used. It has been discovered that for a given ratio of resorcinol to diacid chloride, the use of different amounts of water results in a change in the final molecular weight of the product carboxy-terminated polyarylate after the cleavage of the anhydride linkages (Compare Comparative Examples 2, 3, and 4 of Table 1). Molecular weights obtained after hydrolysis of the initially formed polyarylate are very similar to the molecular weight values obtained when the initially formed polyarylate is subjected to conditions (See "Amine Test") which selectively effect aminolysis of the anhydride linkages present in the initially formed polyarylate. The Amine Test was developed earlier to detect residual anhydride linkages in hydroxy terminated polyarylates. It is believed that under the conditions of the Amine Test no sigaficant ester linkage cleavage occurs.

In the Amine Test an aliquot (approximately 1 mL) is taken from the reaction mixture, (typically prior to hydrolysis). The aliquot is diluted with $CHCl_3$ and excess (50.200 microliters) diisobutylamine is added into the diluted aliquot. The secondary amine cleaves the internal anhydride linkages to form terminal amide and terminal carboxylate groups. The solution is stirred for approximately 2 to 3 minutes, and the amine test mixture is then quenched with 1N HCl and analyzed by GPC. Because the Amine Test results in the quantitative cleavage of all anhydride linkages, the molecular weights obtained upon subjecting the initially formed polyarylate to the Amine Test closely approximate those obtained following complete hydrolysis of the anhydride linkages present in the initially formed polyarylate.

In the following, Examples 1-14, directed to the preparation of carboxy-terminated polyarylates, are not a part of the present invention and are provided as comparative.

TABLE 1 PREPARATION OF "ITR" POLYARYLATES COMPRISING TERMINAL CARBOXY GROUPS[a]

| **Example** | **Sample No.** | **Resorcinol/diacid chloride/$H_2O$ Mole Ratios** | **Polyarylate Mol. Wt Before Hydrolysis** | | **Polyarylate mol. Wt After Amine Test** | | **Polyarylate Mol. Wt After Hydrolysis** |
|---|---|---|---|---|---|---|---|
| | | | **$M_w$[b]** | **$M_n$[b]** | **$M_w$[b]** | **$M_n$[b]** | **$M_w$[b]** |
| Example 1 | EA204 | 0.272/0.327/0..0654 | 38641 | 16489 | 5263 | 1828 | 5041 |
| Example 2 | EA206 | 0.272/0.327/0.134 | 5737 | 3162 | 3872 | 1079 | 4140 |
| Example 3 | EA207 | 0.272/0.327/0.101 | 6283 | 3421 | 5455 | 2046 | - |
| Example 4 | EA208 | 0.272/0.327/0.134 | 4801 | 1673 | 4677 | 1321 | 4517 |
| Example 5 | EA209 | 0.236/0.327/0.134 | 5203 | 1916 | 2794 | 659 | 3060 |
| Example 6 | EA210 | 0.208/0.327/0.134 | 9531 | 4534 | 2029 | 744 | 1653 |
| Example 7 | EA211 | 0.208/0.327/0.134 | 9392 | 2800 | 1614 | - | 1652 |
| Example 8 | EA212 | 0.208/0.327/0.134 | 10963 | 4229 | 1761 | 341 | 1780 |
| Example 9 | EA213 S[c] | 0.208/0.327/0.134 | 11959 | 4823 | 1973 | 684 | 1754 |
| Example 10 | EA213-C[c] | 0.208/0.237/0.134 | 10171 | 5109 | 1832 | 442 | 1977 |
| Example 11 | EA217 | 0.208/0.327/0.134 | 11460 | 3924 | 2075 | 1190 | 1883 |
| Example 12 | EA219 | 0.648/1.014/0.416 | 9641 | 3339 | 1985 | 728 | 2071 |
| Example 13 | EA223 | 16.35/25.61/10.5 | 5511 | 1749 | 1908 | 1049 | 1854 |

(continued)

| Example | Sample No. | Resorcinol/diacid chloride/$H_2O$ Mole Ratios | Polyarylate Mol. Wt Before Hydrolysis | | Polyarylate mol. Wt After Amine Test | | Polyarylate Mol. Wt After Hydrolysis |
|---|---|---|---|---|---|---|---|
| | | | $M_w$[b] | $M_n$[b] | $M_w$[b] | $M_n$[b] | $M_w$[b] |
| Example 14 | E202 | 0.272/0.327/0 | 107216 | 11805 | 12505 | 2863 | 12418 |

[a] A 50/50 mixture of terephthaloyl chloride and isophthaloyl chloride was used for all reactions. [b]As measured by GPC. [c] From a total of 1 equivalent of diols (resorcinol+ tetraethylene glycol). 0.2 equivalent of tetraethylene glycol was used as soft block.

The experimental data provided in Table 1 suggest that at a given ratio of resorcinol to diacid chloride, the presence of a larger amount of water gives rise to a higher concentration anhydride linkages in the initially formed polyarylate, which in turn provides a lower molecular weight carboxy-terminated polyarylate upon complete hydrolysis of the anhydride linkages present in the initially formed polyarylate. The molecular weight of the product carboxy-terminated polyarylate is also affected by the relative amounts of resorcinol and diacid chloride employed (See Examples 5, 6, and 7 of Table 1).

End group analysis of product carboxy-terminated polyarylates of Example 7 (EA210), Example 9 (EA212), Example 10 (EA213), and Example 13 (EA223) by 1H-NMR (in $d_6$- DMSO) revealed the complete absence of resorcinol end groups (i.e. hydroxy end groups), and only carboxylic acid ("carboxy") end groups were detected. The absence of hydroxy end groups in the product polyarylates is compelling evidence that ester linkages present in the initially formed polyarylate do not undergo hydrolysis under the reaction conditions used to effect the hydrolysis of the anhydride linkages, because ester hydrolysis should give rise to both resorcinol and acid end groups. Thus both the amine test and the NMR results suggest that hydrolysis occurs only at anhydride linkages and the number of anhydride linkages present in the initially formed polyarylate controls the molecular weight of the product carboxy-terminated polyarylate.

EXAMPLES 1-14 PREPARATION OF OLIGOMERIC CARBOXY-TERMINATED POLYARYLATES

Example 1 (Sample EA204)

To a 250 mL addition funnel was added resorcinol (30 g) and methylene chloride (100 mL). The heterogeneous mixture was degassed for 5 min with nitrogen and triethylamine (TEA, 114 mL) was added cautiously (Caution: This step was slightly exothermic). The mixture was then agitated for several minutes until a homogeneous solution was achieved.

A 3-neck, one liter glass reaction vessel equipped with a condenser, nitrogen inlet, mechanical stirrer and the addition funnel described above, was charged with a 1:1 mixture of iso- and terephthaloyl chloride (189.7 grams of 35% by weight solution of the 1:1 iso/tere mixture in methylene chloride) and methylene chloride solvent (180 mL). To the stirred solution was then added triethylamine (9.1 mL) in methylene chloride (100 mL). The resultant orange solution was stirred for about 1 minute (min.) and then water (1.17 mL) was added in two equal portions at 1 minute intervals. When the color of the resultant solution disappeared (1-2 min.) the resorcinol-TEA solution prepared above was added dropwise via the addition funnel over a period of about 25 minutes. Approximately 150 mL of additional methylene chloride was then added to dilute the reaction mixture, the viscosity of which was observed to increase during the addition of the resorcinol-TEA solution. The reaction mixture was then stirred under nitrogen for an additional 50 minutes and an aliquot was removed. A portion of the aliquot was analyzed directly by gel permeation chromatography (GPC), and a portion of this aliquot was subjected to the "Amine Test"(See description of the Amine Test above). This aliquot which represents the "initially formed polyarylate" (i.e. the polyarylate "before hydrolysis") had a weight average molecular weight ($M_w$) of 58641 grams per mole and a number average molecular weight ($M_n$) of 16489 grams per mole. After removal of the aliquot, water (300 mL) was added to the reaction vessel to effect the quantitative hydrolysis of the anhydride linkages present in the initially formed polyarylate, and the resultant hydrolysis mixture was stirred for approximately two hours at ambient temperature. Aliquots were taken periodically and analyzed by GPC. When the molecular weight values obtained by GPC stabilized and approximated the molecular weights observed in the "Amine Test", hydrolysis was discontinued. The stirred reaction mixture was quenched by the addition of sufficient 2N HCl to bring the pH of the aqueous layer to about 3. The product oligomeric carboxy-terminated polyarylate precipitated during the addition of the 2N HCl. The heterogeneous mixture was then stirred overnight, filtered and the solid product was washed with water until the washings were approximately pH 5. The product was found to contain about 6 % by weight of a

mixture of iso- and terephthalic acids. As determined by GPC, the product carboxy-terminated polyarylate had a weight average molecular weight ($M_w$) of 5041 grams per mole (Compare with $M_w$ = 5263 in the Amine Test). The product was purified (see procedure below) to remove residual iso- and terephthalic acid, and then dried in a vacuum oven at 75 °C for approximately two days prior to its use in a coating formulation.

Example 2 (Sample EA206)

A solution of resorcinol and triethylamine in methylene chloride was prepared using the same amounts as given in Example 1. The remainder of the experimental procedure was identical to Example 1 except that 18.2 mL of TEA (instead of 9.1 mL) and 2.4 mL of water (instead of 1.17 mL) were used in the initial reaction to form the "initially-formed polyarylate". The product carboxy-terminated polyarylate had $M_w$ of 4140 g/mol.

Examples 3-4 were carried out analogously.

Example 5 (Sample EA209)

To a 250 mL addition funnel was added resorcinol (26 g) and methylene chloride (80 mL). The heterogeneous mixture was degassed for 5 min with nitrogen and triethylamine (TEA, 114 mL) was added cautiously (Caution: This step was slightly exothermic). The mixture was then agitated for several minutes until a homogeneous solution was achieved.

To a reaction vessel equipped as in Example 1 was added iso- and terephthaloyl chloride (189.7 grams of 35% by weight solution of the 1:1 iso/tere mixture in methylene chloride) and methylene chloride solvent (130 mL). To the stirred solution was then added triethylamine (18.2 mL) in methylene chloride (100 mL). The resultant orange solution was stirred for about 1 minute (min.) and then water (2.4 mL) was added in two equal portions at 1 minute intervals. When the color of the resultant solution disappeared (1-2 min.) the resorcinol-TEA solution prepared above was added dropwise via the addition funnel over a period of about 25 minutes. Approximately 120 mL of additional methylene chloride was then added to dilute the reaction mixture. The reaction mixture was then stirred under nitrogen for an additional 50 minutes and an aliquot was removed. A portion of the aliquot was analyzed directly by gel permeation chromatography (GPC), and a portion of this aliquot was subjected to the "Amine Test". See results in Table 1. Water (300 mL) was added to the reaction vessel to effect the quantitative hydrolysis of the anhydride linkages present in the initially formed polyarylate as in Example 1. The product oligomeric carboxy-terminated polyarylate was isolated and characterized as in Example 1. The product was found to contain about 6 % by weight iso- and terephthalic acid. As determined by GPC the product carboxy-terminated polyarylate had a weight average molecular weight ($M_w$) of 3060 grams per mole (g/mol) (Compare with $M_w$ = 2794 g/mol in the Amine Test). The product was purified (see procedure below) to remove residual iso- and terephthalic acid, and then dried in a vacuum oven at 75 °C for approximately two days prior to its use in a coating formulation.

Example 6 (Sample EA210)

To a 250 mL addition funnel was added resorcinol (23 g) and methylene chloride (84 mL). The heterogeneous mixture was degassed for 5 min with nitrogen and triethylamine (TEA, 114 mL) was added cautiously (Caution: This step was slightly exothermic). The mixture was then agitated for several minutes until a homogeneous solution was achieved.

To a reaction vessel equipped as in Example 1 was added iso- and terephthaloyl chloride (189.7 grams of a 35% by weight solution of the 1:1 iso/tere mixture in methylene chloride) and methylene chloride solvent (236 mL). To the stirred solution was then added triethylamine (18.2 mL) in methylene chloride (80 mL). The remainder of the procedure was the same as that described in Example 1. The product carboxy-terminated polyarylate had a weight average molecular weight ($M_w$) of 1653 g/mol.

Examples 7-8 were carried out analogously

Example 9 (Sample EA213-S) "Soft Block" Containing Carboxy-Terminated Polyarylate

To a 250 mL addition funnel was added resorcinol (18.4 g, 0.167 mole, 0.8 equiv. with respect to total diols), tetraethylene glycol (8.12 g, 0.0418 mol) and methylene chloride (84 mL). The heterogeneous mixture was degassed for 5 minutes with nitrogen, and triethylamine (TEA, 114 mL) was added cautiously (Caution: This step was slightly exothermic). The mixture was then agitated for several minutes until a homogeneous solution was achieved.

A reaction vessel equipped as in Example 1 was charged with iso- and terephthaloyl chloride (189.7 grams of 35% by weight solution of the 1:1 iso/tere mixture in methylene chloride) and methylene chloride solvent (236 mL). The remainder of the experimental was the same as that described in Example 6. The product carboxy-terminated polyarylate

comprising tetraethylene glycol derived soft blocks had a weight average molecular weight ($M_w$) of 1754 g/mol.

Example 10 (EA 213-C) was carried out as in Example 9.

Example 11 was carried by analogy to Example 2.

Example 12 (Sample EA 219)

To a one liter addition funnel was added resorcinol (71.3 g) and methylene chloride (260 mL). The heterogeneous mixture was degassed for 5 min with nitrogen and triethylamine (TEA, 353 mL) was added cautiously (Caution: This step was slightly exothermic). The mixtures was then agitated for several minutes until a homogeneous solution was achieved.

Into a five liter reaction vessel equipped as in Example 1 was added a mixture of iso-and terephthaloyl chloride (588 g of a 35% by weight solution of the 1:1 iso/tere mixture in methylene chloride) and methylene chloride solvent (740 mL). To the stirred solution was then added triethylamine (62 mL) in methylene chloride (248 mL). The resultant orange solution was stirred for about 1 minute (min.) and then water (7.5 mL) was added in two equal portions at 1 minute intervals. When the color of the solution disappeared (1-2 min) the resorcinol-TEA solution prepared above was added dropwise via the addition funnel over a period of about 25 minutes. The resultant mixture was stirred for a period of about 50 minutes and an aliquot was taken for GPC and the Amine Test. Water (500 mL) was then added to the reaction vessel and the mixture was stirred for approximately 2 hours. The product carboxy-terminated polyarylate was isolated and characterized as in Example 1.

Example 13 (Sample EA 223)

To a container equipped for stirring and operation under an inert atmosphere was added resorcinol (1801.5 g) and methylene chloride (6500 mL). The heterogeneous mixture was degassed for 5 min with nitrogen and triethylamine (TEA, 9 liters) was added cautiously (Caution: This step was slightly exothermic). The mixture was then agitated for several minutes until a homogeneous solution was achieved.

A 50 gallon glass reaction vessel equipped with a condenser, nitrogen inlet, mechanical stirrer and the addition funnel described above, was charged with isophthaloyl chloride (2600 grams), terephthaloyl chloride (2600 grams) and methylene chloride solvent (approx. 20 liters). To the stirred solution was then added triethylamine (1566 mL) in methylene chloride (6265 mL). Water (189 mL) was added in two equal portions at 1 minute intervals with vigorous stirring. When the color of the resultant solution disappeared the resorcinol-TEA solution prepared above was added via an addition tube over a period of about 25 minutes. The reaction mixture was then stirred under nitrogen for an additional 50 minutes and an aliquot was removed. A portion of the aliquot was analyzed directly by gel permeation chromatography (GPC), and a portion of this aliquot was subjected to the "Amine Test"(See description of the Amine Test above). This aliquot which represents the "initially formed polyarylate" (i.e. the polyarylate "before hydrolysis") had a weight average molecular weight ($M_N$,) of 5511 grams per mole and a number average molecular weight ($M_n$) of 2749 grams per mole. After removal of the aliquot, water (32 liters) was added to the reaction vessel and the mixture was stirred for approximately two and half hours at ambient temperature. The stirred reaction mixture was quenched by addition of sufficient 2N $H_2SO_4$ to bring the pH of the aqueous layer to about 3.4. The product oligomeric carboxy-terminated polyarylate precipitated during the addition of the 2N $H_2SO_4$. The heterogeneous mixture was then stirred overnight, filtered and the solid product was washed with water until the washings were approximately pH 5. The product was found to contain about 6 % by weight iso-and terephthalic acid. As determined by GPC the product carboxy-terminated polyarylate had a weight average molecular weight ($M_w$) of 1854 grams per mole (Compare with $M_w$ = 1908 grams per mole in the Amine Test).

Example 14 (Sample EA 202)

Example 14 was carried out as in Example 1 with the exception that no water was added to the reaction vessel until after the formation of "initially formed polyarylate" (i.e. no water added until the hydrolysis step). The initially formed polyarylate was characterized as in Example 1 and found to have a weight average molecular weight ($M_w$) of 107216 grams per mole and a number average molecular weight ($M_n$) of 11805 grams per mole. The initially formed polyarylate was hydrolyzed and isolated as in Example 1 and the product carboxy-terminated polyarylate was found to have a weight average molecular weight ($M_w$) of 12418 grams per mole.

REMOVAL OF ISO/TEREPHTHALIC ACID FROM PRODUCT CARBOXY-TERMINATED POLYARYLATES

Prior to their use in coating formulations, the product carboxy-terminated polyarylates were freed from iso- and terephthalic acid contaminants using the following procedure. The crude carboxy-terminated polyarylate was dissolved in hot 7:3 chloroform/i-PrOH (volume/volume). The resultant solution was allowed to cool to room temperature and was

then washed with an aqueous sodium hydroxide. The organic layer was acidified with aqueous acid to achieve a pH in a range between about pH3 and about pH 4. The product carboxy-terminated polyarylates were then isolated by precipitation into a mixture of methanol and water.

EXAMPLES 15-30 AND COMPARATIVE EXAMPLES 1-3 COATINGS PREPARED USING THE CARBOXY-TERMINATED POLYARYLATES

The coatings were applied to two different substrates: (i) AL-2024, 4 x 6 inch aluminum panels and (ii) CRS-1008, B952 pretreated 4 x 6 inch steel panels. Both substrates were rinsed with acetone and dried before being coated. These substrates were prefabricated sheets procured from Q-PANEL LAB PRODUCTS INC. (for aluminum) and ACT LABORATORIES INC. (for steel).

The weight percentage of each component used in the formulations for examples 15-30 and Comparative Examples 1-3 along with the property data are shown in Table 2.

Solvent cast coatings were prepared by dissolving the coating components in a suitable solvent, typically dimethylacetamide, to provide a solution containing component A (comprising the carboxy-terminated polyarylate), component B (at least one "organic species" comprising one or more functional groups, said functional groups being chemically reactive with the terminal carboxy groups of the polyarylate of component A) and optionally component C (one or more catalysts which promote chemical reaction between the polyarylate terminal carboxy groups of component A and the chemically reactive functional groups of component B). As noted, although dimethylacetamide was typically employed, other suitable solvents and co-solvents could be employed as well. Suitable solvents and co-solvents include amide solvents such as dimethylformamide, N-methylpyrolidinone (NMP), and the like; esters such as ethyl acetate, butyl acetate, and the like; ketones such as acetone, methyl ethyl ketone, methyl iso-butyl ketone, and the like; alcohols such as methanol, ethanol, and the like; aromatic solvents such as toluene, xylenes, chlorobenzene and the like; halogenated aliphatic solvents such as dichloromethane, chloroform, dichloroethane and the like. It should be noted as well that mixtures solvents and co-solvents may be employed advantageously. The mixture of the coating components and the solvent was then placed on a laboratory roller mixer for at least 10 minutes prior to application of the coating formulation to the substrate in order to ensure thorough mining of the components and their complete dissolution in the solvent system chosen. If necessary the coating formulation so prepared was heated to about 90°C to achieve homogeneity.

The formulations were applied manually to the substrates using a 10 mil draw down frame. After application the coating formulation were allowed to stand for a short time under ambient conditions before being cured at the specified temperature and time (See Table 2).

MEASUREMENTS OF COATING PROPERTIES

After curing, the coated substrates were allowed to cool to room temperature and were held at ambient temperature and pressure for at least 15 hours before being subjected to the methyl ethyl ketone (MEK) "double rub" test, and the impact tests described in the general experimental section above.

Formulations used to prepare the coatings, coating cure conditions, "double rub" and impact test data are given in Table 2.

In Table 2 with respect to the table headings, "Wt%" indicates the weight percent all non-volatile components of the formulation and does not factor in any solvent present; "Cure Conditions" indicates the conditions of time and temperature under which the coating was cured; "MEK DR" represents the experimental value obtained in the "double rub' test detailed above; "DI" is the value obtained in the "direct impact test" as measured on the Gardner Impact Tester; and "II" is the value obtained in the "indirect impact test" as measured on the Gardner Impact Tester.

In Table 2 with respect to the "component (A)" listed for each Example, "EA 211" represents a polyarylate having a weight average molecular weight ($M_w$) of about 1652 grams per mole, and comprising structural units having formula I, and further comprising terminal carboxy groups; and "EA 212" represents a polyarylate having a weight average molecular weight ($M_w$) of about 1780 grams per mole, and comprising structural units having formula I, and further comprising terminal carboxy groups. The polyarylates comprising structural units having formula I, and further comprising terminal carboxy groups are also referred to as "acid-capped ITR polymer".

In Table 2 with respect to the "component (B)" listed for each Example, "TGIC" represents triglycidylisocyanurate (CAS No. 2451-62-9); "FINE CLAD A-229-30-A" (Reichhold Inc.) is a polyacrylate containing glycidyl methacrylate-derived structural units; and "FINE-CLAD A-272" (Reichhold Inc.) is a polyacrylate containing glycidyl methacrylate-derived structural units.

In Table 2 with respect to the "component (C)" listed for each Example, "BTMAB" represents the catalyst benzyltrimethylammonium bromide.

In Table 2, in addition to components (A), (B) and(C) there are listed additional components of the coating formulation. With respect to these additional components which are present but which are neither polyarylates comprising

structural units having formula I and further comprising terminal carboxy groups, nor "organic species" comprising one or more functional groups which chemically reactive with said terminal carboxy groups, nor a catalyst which promotes chemical reaction between the polyarylate terminal carboxy groups of component A and the "organic species" of component B; "FLUORAD FC 4430" is a fluorosurfactant (3M Inc.); "FINE-CLAD M8950" is a polyester containing free carboxylic acid groups (Reichhold Inc.) which does not comprise structural units corresponding to formula I, "DDDA" is dodecanedioic acid; "CRYLCOAT 632" is a carboxylic acid functionalized polyester which does not comprise structural units corresponding to formula I (UCB Group); and "CRYLCOAT 7309" is a carboxylic acid functionalized polyester which does not comprise structural units corresponding to formula I (UCB Group).

TABLE 2 EXAMPLE COATINGS OF THE PRESENT INVENTION AND COMPARATIVE EXAMPLES

| **Examples No. (Component)** | **Wt%** | **Cure Conditions** | **MEK DR** | **DI** | **II** |
|---|---|---|---|---|---|
| **Example 15** | | | | | |
| EA2012 (A) | 80,87% | 20 min. at 16°C | >200 | 40 | 5 |
| TGIC (B) | 16.64% | | | | |
| BTMAB (C) | 1.4% | | | | |
| FLOURAD FC 4430 | 1.02% | | | | |
| | | | | | |
| **Example 16** | | | | | |
| EA212 (A) | 49.42% | 20 mim. at 160°C | >200 | 10 | 0 |
| FINE-CLAD A-229-30-A (B) | 4.86% | | | | |
| BTMAB (C) | 1.51% | | | | |
| FLOURAD FC 4430 | 1.22% | | | | |
| | | | | | |
| **Example** 17 | | | | | |
| EA211 (A) | 59.35% | 20 min. at 140°C | >200 | 20 | 0 |
| FINE-CLAD A-272 (B) | 39.63% | 20 min. at 160°C | >200 | 30 | 5 |
| FLOURAD FC 4430 | 1.02% | | | | |
| **Example 18** | | | | | |
| EA212 (A) | 34.34% | 20 min. at 160°C | >200 | 60 | 60 |
| CRYLCOAT 632 | 52.16% | | | | |
| TGIC (B) | 10.60% | | | | |
| BTMAB (C) | 1.66% | | | | |
| FLOURAD FC 4430 | 1.24% | | | | |
| | | | | | |
| **Example 19** | | | | | |
| EA212 (A) | 35.09% | 20 min. at 160°C | >200 | 100 | 80 |
| CRYLCOAT 632 | 52.94% | | | | |
| TGIC (B) | 10.86% | | | | |
| FLOURAD FC 4430 | 1.11% | | | | |

(continued)

| | | | | | |
|---|---|---|---|---|---|
| **Example 19** | | | | | |
| | | | | | |
| **Example 20** | | | | | |
| EA212 (A) | 27.61% | 20 min. at 160°C | 92 | 50 | 5 |
| CRYLCOAT 632 | 61.11% | | | | |
| TGIC (B) | 10.28% | | | | |
| FLOURAD FC 4430 | 1.00% | | | | |
| **Example 21** | | | | | |
| EA212 (A) | 21.59% | 20 min. at 160°C | 67 | 80 | 10 |
| CRYLCOAT 632 | 68.32% | | | | |
| TGIC (B) | 9.14% | | | | |
| FLOURAD FC 4430 | 0.95% | | | | |
| | | | | | |
| **Example 22** | | | | | |
| EA211 (A) | 24.89% | 30 min. at 140°C | 180 | | |
| CRYLCOAT 632 | 36.93% | | | | |
| FINE-CLAD A-229-30-A (B) | 37.18% | | | | |
| FLOURAD FC 4430 | 1.00% | | | | |
| | | | | | |
| **Example 23** | | | | | |
| EA212 (A) | 35.79% | 20 min. at 160°C | 130 | 160 | 150 |
| CRYLCOAT 7309 | 52.30% | | | | |
| TGIC (B) | 10.77% | | | | |
| FLOURAD FC 4430 | 1.14% | | | | |
| | | | | | |
| **Example 24** | | | | | |
| EA212 (A) | 43.44% | 20 min. at 160°C | >200 | 160 | 160 |
| CRYLCOAT 7309 | 43.65% | | | | |
| TGIC (B) | 11.87% | | | | |
| FLOURAD FC 4430 | 1.04% | | | | |
| | | | | | |
| **Example 25** | | | | | |
| EA212 (A) | 56.57% | 20 min. at 160°C | >200 | 160 | 160 |

(continued)

| | | | | | |
|---|---|---|---|---|---|
| **Example 25** | | | | | |
| CRYLCOAT 7309 | 28.71% | | | | |
| TGIC (B) | 13.60% | | | | |
| FLOURAD FC 4430 | 1.12% | | | | |
| | | | | | |
| **Example 26** | | | | | |
| EA211 (A) | 36.81% | 30 min. at 140°C | >200 | 140 | <60 |
| CRYLCOAT 7309 | 19.06% | | | | |
| FINE-CLAD A-229-30-A (B) | 43.08% | | | | |
| FLOURAD FC 4430 | 1.06% | | | | |
| | | | | | |
| **Example 27** | | | | | |
| EA212 (A) | 24.24% | 20 min. at 160°C | 92 | 160 | 160 |
| FINE-CLAD M 8950 | 65.09% | | | | |
| TGIC (B) | 9.63% | | | | |
| FLOURAD FC 4430 | 1.04% | | | | |
| **Example 28** | | | | | |
| EA212 (A) | 30.55% | 20 min. at 160°C | 180 | 160 | 160 |
| FINE-CLAD M 8950 | 58.09% | | | | |
| TGIC (B) | 10.37% | | | | |
| FLOURAD FC 4430 | 0.99% | | | | |
| | | | | | |
| **Example 29** | | | | | |
| EA212 (A) | 38.85% | 20 min. at 160°C | >200 | 160 | 160 |
| FINE-CLAD M 8950 | 48.86% | | | | |
| TGIC (B) | 11.27% | | | | |
| FLOURAD FC 4430 | 1.01% | | | | |
| | | | | | |
| **Example 30** | | | | | |
| EA211 (A) | 22.09% | 30 min. at 140°C | 120 | 160 | 160 |
| FINE-CLAD M 8950 | 40.84% | | | | |
| FINE-CLAD A-229-30-A (B) | 36.04% | | | | |
| FLOURAD FC 4430 | 1.02% | | | | |
| | | | | | |

(continued)

| | | | | | |
|---|---|---|---|---|---|
| **Example 30** | | | | | |
| | | | | | |
| **Comparative Example 1** | | | | | |
| FINE-CLAD M8950 | 91.6% | 20 min. at 160°C | 37 | 160 | 160 |
| TGIC (B) | 6.3% | | | | |
| BTMAB (C) | 1.1% | | | | |
| FLUORAD FC 4430 | 1.0% | | | | |
| | | | | | |
| **Comparative Example 2** | | | | | |
| DDDA | 17.81% | 20 min. at 160°C | 85 | 30 | 0 |
| FINE-CLAD A-229-30-A (B) | 80.37% | | | | |
| BTMAB (C) | 0.78% | | | | |
| FLOURAD FC 4430 | 1.04% | | | | |
| | | | | | |
| **Comparative Example 3** | | | | | |
| DDDA | 25.16% | 20 min. at 140°C | 20 | 140 | 20 |
| FINE-CLAD A-272 (B) | 73.81% | 20 min. at 160°C | 80 | 150 | 160 |
| FLOURAD FC 4430 | 1.03% | | | | |

The data in Table 2 for Examples 15-30 reveal the outstanding performance of the coatings of the present relative to the coatings of Comparative Examples 1-3. The MEK double rub results in Table 2 show that formulations containing component A consistently outperform analogous coatings, which do not contain component A (See Comparative Examples). When component A is added to a formulation with moderate solvent resistance the solvent resistance improves dramatically (e.g. compare Comparative Example 1 with Examples 27-30) while retaining an acceptable impact resistance.

In the following, Example 31, directed to the preparation of a carboxy-terminated oligomeric polyarylate comprising a polycaprolactonediol "Soft Block", and Examples 32-33, directed to the preparation of a functionalized polyarylate, are not a part of the present invention and are provided as comparative.

Example 31 illustrates the preparation of a carboxy-terminated oligomeric polyarylate comprising a polycaprolactonediol "Soft Block".

Example 31

A first vessel was charged with polycaprolactonediol ("PCLD", 1542 grams, 2.91 mole) having a GPC-measured number average molecular weight ($M_n$) of 530, methylene chloride (1.1 liters), and triethylamine ("TEA", 1.6 liters). Caution should be exercised as this mixing is slightly exothermic. The mixture was agitated mechanically until a clear solution was achieved. The solution was degassed for 5 minutes with nitrogen prior to its use, A second vessel was charged with resorcinol (1818 grams, 16.49 mole) and methylene chloride (6.4 litters). The resultant mixture was degassed for 5 minutes with nitrogen and subsequently triethylamine ("TEA", 9 liters) was cautionsly added (exotherm!). The mixture was stirred until clear solution was achieved.

A reaction vessel was charged with isophthaloyl chloride (3087 grams), terephthaloyl chloride (3087 grams) and methylene chloride (28.2 liters) and was stirred under nitrogen until the mixture became homogeneous. A solution of triethylamine (1860 mL) in methylene chloride (7.4 liters) was then added to the solution of the acid chlorides. The resultant mixture was stirred for about 1 minute as color of the mixture changed to orange. Water (225 mL) was then added in two equal portions at 1 minute intervals while the mixture was stirred vigorously. When the orange color of the mixture disappeared (1-2 minutes following completion of the addition of the water) the solution from the first vessel described above was added over a 5 minute period. The resultant mixture was stirred for an additional 10 minute period. This was followed by the addition of the resorcinol-TEA solution from the second vessel over a period of about 20

minutes, When this addition was complete the solution was stirred under nitrogen for an additional 50-60 minutes and a sample was removed for GPC analysis after the sample had been subjected to the "amino test" described above. Subsequently, water (36 liters) was added to the reactor to effect hydrolysis of anhydride linkages. The resultant hydrolysis mixture was stirred until the molecular weight of the product acid-terminated polyarylate comprising the polycaprolactonediol soft block stabilized (after about 4 hours) as measured by GPC at approximately the molecular of the product obtained by subjecting the first sample to the amine test described above. The reaction was then quenched with 2N $H_2SO_4$ (about 13.5 liters) until the pH of the aqueous phase was about 3. The layers were separated and the organic phase was added to approximately 1.5 volumes of methanol to precipitate the product carboxy-terminated oligomeric polyarylate comprising a polycaprolactonediol "Soft Block". The product was filtered, washed with water, and dried under vacuum for 48 hours at 45°C. Following drying the product (7 kilograms) was ground and dissolved in hot chloroform/ isopropanol (iPrOH) (7:3 vol:vol, 100 liters). The solution was allowed to cool to room temperature and water (80 liters) was added to the reactor. This was followed by the addition of dilute (1% by weight NaOH) sodium hydroxide solution was added in small portions with stirring until the pH of the mixture was in a range between about 5.5 and about 6.0. The mixture was allowed to stand for about 2 hours to effect separation of the organic and aqueous phases. The organic layer was washed once with water and was then stirred and treated while with 1N HCl until the apparent pH of the stirred mixture was about 3. The organic layer was again separated and a portion of the chloroform was evaporated to produce a somewhat more concentrated solution of the product purified carboxy-terminated oligomeric polyarylate comprising a polycaprolactonediol soft block. The product was isolated by precipitation into approximately 5 volumes of a 2:5 mixture of water-methanol mixture. The product was filtered, washed with water, and dried under vacuum at 50 °C for 48 hours. GPC analysis of the product indicated a weight average molecular weight ($M_w$) of 2135 grams per mole relative to polystyrene standards.

Example 32: Preparation of a Functionalized Linear Polyarylate

Step (A) A 35 weight percent solution of the diacid chloride was prepared in a 1-liter three-necked round-bottom flask (equipped with a condenser and addition funnel) from diacid chloride (a mixture of 1 : 1 weight ratio of terephthaloyl chloride and isophthaloyl chloride; 120 grams, 0.414 moles) and dichloromethane solvent (200 mL). The entire reaction set up was maintained under a nitrogen atmosphere. A solution of pyridine (35 grams, 0.443 moles) in dichloromethane (25 mL) was then added, followed by addition with stirring over approximately 12 minutes of a solution of resorcinol (18.4 grams, 0.334 moles) in dichloromethane (81 mL). During this time, the reaction mixture turned opaque and heated up to a gentle reflux. After the addition was complete the reaction was allowed to stir for an additional 10 minutes to allow for the formation of the chlorocarbonyl-terminated polyarylate oligomer. This oligomer can be further functionalized into polyarylates having other reactive endgroups by reaction with a suitable functionalizing agent, as exemplified below.

Step (B): A solution of glycidol (6.2 grams, 0.0836 moles) in 200 mL of dichloromethane was charged into an addition funnel and added to the chlorocarbonyl-terminated polyarylate oligomer prepared above in Step (A) over about 10 minutes. During this time, the reaction mixture was observed to reflux gently due to the exotherm generated. The reaction mixture was allowed to stir for an additional 50 minutes before being washed twice with 250 mL of a 4 : 1 (volume/volume) water/isopropyl alcohol mixture. The dichloromethane phase was separated and evaporated to dryness under reduced pressure to furnish the desired epoxy-terminated linear polyarylate oligomer. The product oligomer had a number average molecular weight of 2800 and a weight average molecular weight of 4740, as measured by gel permeation chromatography.

In an alternate method, the glycidol and resorcinol can be added concurrently to the diacid chloride solution to give a substantially identical polyarylate product.

Example 33 Preparation of a Functionalized Branched Polyarylate

A diacidchloride solution consisting of a 1 to 1 mixture of iso- and terephthaloyl chlorides (189.69 g, 635.5 mmol -COCl groups) in dichloromethane (230 mL) was charged to a 1-liter three-necked round-bottom flask equipped with a nitrogen inlet, reflux condenser, stirrer, and pressure equalizing addition funnel. A solution of triethylamine (18.3 mL, 131 mmol) in dichloromethane (83 ml) was then added to the flask followed in one-minute intervals by 2 aliquots of 1.2 ml of water each (total water added = 2.4mL, 133.3 mmol). A solution consisting of polycaprolactone triol (CAPA 3050, 15.00g, 84.6 mmol OH groups, CAPA 3054 is the reaction product of trimethylolpropane and caprolactone having a number average molecular weight ($M_n$) of about 540 grams per mole), triethylamine (28.6 mL, 205.1 mmol) and dichloromethane (21 mL) was then added to the flask via the addition funnel and added to the stirred reaction mixture over the course of approximately 5 minutes. During the addition of the polycaprolactone triol solution the reaction mixture became opaque and began a gentle reflux. Upon completion of the polycaprolactone triol addition a solution consisting of resorcinol (18.42 grams, 334.6 mmol OH groups), triethylamine (85.3 mL), and dichloromethane (60 mL) was prepared in the addition funnel and added to the stirred reaction mixture over approximately 15 minutes. (In certain instances

when conducting this procedure or a variation of it, an increase in the viscosity of the reaction mixture has been observed upon completion of the addition of the resorcinol solution. In these instances, additional dichloromethane (100 mL) was added to prevent gel formation). The reaction was stirred for 80 minutes at room temperature and then quenched by the addition of water (approx. 200 mL). The quenched reaction mixture was then stirred for 230 minutes and subsequently acidified to pH 2 with aqueous HCl (2 molar). The crude product was isolated by precipitation with methanol as a white solid which was dried under vacuum. The crude product was redissolved in chloroform (500 mL) which contained approximately 10 mL of triethylamine. This solution was washed sequentially with water (containing 20% isopropyl alcohol), 2 molar aqueous HCl, and water (containing 20% isopropyl alcohol). The recovered organic layer was precipitated with methanol, filtered, and dried under vacuum to yield the product branched polyarylate comprising carboxy endgroups as a fine white powder (27.2 g) which was shown by GPC to have Mn= 3500 and Mw= 6900. Differential scanning calorimetry (DSC) indicated a glass transition temperature (Tg) of 65 °C.

The invention has been described in detail with particular reference to preferred embodiments thereof, but it will be understood by those skilled in the art that variations and modifications can be effected within the spirit and scope of the invention.

## Claims

1. A cured composition comprising structural units derived from components A and B:

   (i) component A comprising at least one polyarylate comprising structural units having formula I

   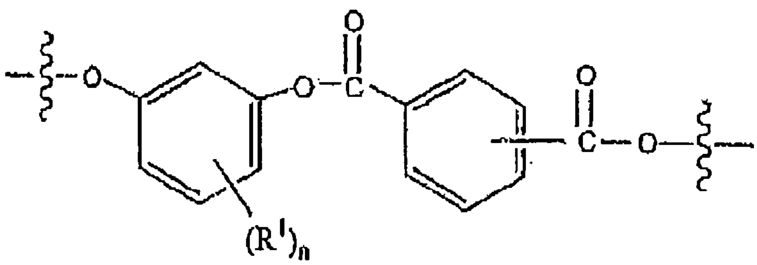

   Formula (I)

   wherein $R^1$ is independently at each occurrence a $C_1$-$C_{12}$ alkyl radical and n is 0-3, said polyarylate further comprising terminal carboxy groups; and
   (ii) component B consisting of at least one "organic species" comprising one or more functional groups, said functional groups being chemically reactive with the terminal carboxy groups of the polyarylate of component A, wherein the functional groups of component B are selected from the group consisting of isocyanates, epoxies, aliphatic esters, hydroxyl groups, and aromatic esters.

2. The composition according to claim 1 further comprising a co-resin.

3. The composition according to claim 1 wherein the concentration of component A is about 1 to about 99 percent by weight of the total weight of the composition.

4. The composition according to claim 1 wherein said polyarylate has a number average molecular weight in a range between about 2000 and about 5000 grams per mole.

5. The compostion according to claim 1 further comprising component C which is one or more catalysts which has promoted the chemical reaction between the polyarylate of component A and the "organic species" of component B.

6. The composition according to claim 1 wherein said polyarylate has a weight-average molecular weight in a range between about 500 and about 14,000 grams per molecule.

7. A method of making a cured composition of claim 1 comprising forming a mixture of coating components comprising component A and component B and curing the mixture of coating components.

**8.** A method according to claim 7, wherein component C as specified in claim 5 is employed.

**9.** A method according to claim 7 or 8, wherein the mixture of coating components is applied to a substrate prior to coating.

**10.** An article comprising:

a substrate layer comprising at least one thermoplastic polymer, thermoset polymer, a cellulosic material, glass or metal, and
at least one cured coating layer thereon, said coating comprising the cured composition as defined in claim 1 wherein:

component A comprises at least one oligomeric polyarylate.

**11.** A composition according to claim 1 comprising components A and B:

wherein $R^1$ is independently at each occurrence a $C_1$-$C_{12}$ alkyl radical and "n" is 0-3, said functionalized polyarylate further comprising at least one reactive endgroup selected from the group consisting of epoxide groups, thioepoxide groups, aliphatic hydroxy groups, aldehyde groups, acetal groups, ketal groups, thioacetal groups, thioketal groups, ketone groups, thioketone groups, nitrile groups, isonitrile groups, amide groups, amine groups, azide groups, hydrazine groups, azo- groups, thiol groups, selenol groups, disulfide groups, diselenide groups, silyl ether groups, silyl ester groups, silane groups, olefin groups, activated olefin groups, urethane groups, acylurethane groups, haloarene groups, nitroarene groups, oxime groups, aliphatic nitro groups, thiourea groups, lactone groups, guanidine groups, and amidine groups.

**Patentansprüche**

**1.** Ein ausgehärtete Zusammensetzung umfassend strukturelle Einheiten abgeleitet von Komponenten A und B:

(i) Komponente A umfassend mindestens ein Polyarylat umfassend strukturelle Einheiten mit der Formel I

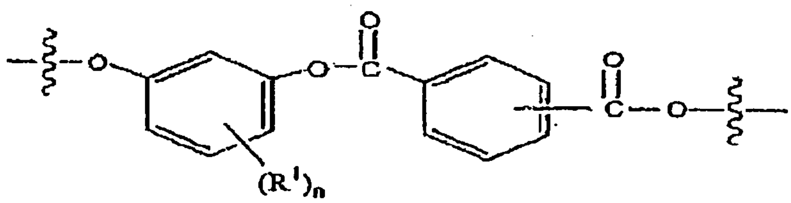

Formel (I)

worin $R^1$ unabhängig bei jedem Vorkommen ein $C_1$-$C_{12}$ Alkylradikal ist, und n ist 0-3, wobei das Polyarylat weiter terminale Carboxygruppen umfasst; und
(ii) Komponente B bestehend aus mindestens einer "organischen Spezies" umfassend eine oder mehrere funktionelle Gruppen, wobei die funktionellen Gruppen chemisch reaktiv sind mit den terminalen Carboxygruppen des Polyarylats der Komponente A, worin die funktionellen Gruppen der Komponente B gewählt sind aus der Gruppe bestehend aus Isocyanaten, Epoxies, aliphatischen Estern, Hydroxylgruppen, und aromatischen Estern.

**2.** Die Zusammensetzung gemäß Anspruch 1, weiter ein Co-Harz umfassend.

**3.** Die Zusammensetzung gemäß Anspruch 1, worin die Konzentration von Komponente A ungefähr 1 bis ungefähr 99 Gewichtsprozent des Gesamtgewichts der Zusammensetzung ist.

**4.** Die Zusammensetzung gemäß Anspruch 1, worin das Polyarylat ein Zahlenmittel des Molekulargewichts in dem

Bereich zwischen ungefähr 2000 und ungefähr 5000 Gramm pro Mol hat.

**5.** Die Zusammensetzung gemäß Anspruch 1, weiter umfassend Komponente C, welche einer oder mehrere Katalysatoren ist, welche(r) die chemische Reaktion zwischen dem Polyarylat der Komponente A und der "organischen Spezies" der Komponente B gefördert hat/haben.

**6.** Die Zusammensetzung gemäß Anspruch 1, worin das Polyarylat ein Gewichtsmittel des Molekulargewichts in einem Bereich zwischen ungefähr 500 und ungefähr 14,000 Gramm pro Molekül hat.

**7.** Ein Verfahren zur Herstellung einer ausgehärteten Zusammensetzung gemäß Anspruch 1, umfassend das Bilden einer Mischung aus Beschichtungskomponenten umfassend Komponente A und Komponente B, und Aushärten der Mischung aus Beschichtungskomponenten.

**8.** Ein Verfahren gemäß Anspruch 7, worin Komponente C, wie in Anspruch 5 angegeben, verwendet wird.

**9.** Ein Verfahren gemäß Anspruch 7 oder 8, worin die Mischung aus Beschichtungskomponenten vor der Beschichtung auf ein Substrat aufgetragen wird.

**10.** Ein Artikel, der folgendes umfasst:

eine Substratschicht, umfassend mindestens ein thermoplastisches Polymer, duroplastisches Polymer, ein zellulosisches Material, Glas oder Metall, und
mindestens eine ausgehärtete Beschichtungsschicht darauf, wobei die Beschichtung die ausgehärtete Zusammensetzung wie in Anspruch 1 definiert umfasst, worin:

Komponente A mindestens ein oligomeres Polyarylat umfasst.

**11.** Eine Zusammensetzung gemäß Anspruch 1, umfassend Komponenten A und B:

worin $R^1$ unabhängig bei jedem Vorkommen ein $C_1$-$C_{12}$ Alkylradikal ist, und "n" ist 0-3, wobei das funktionalisierte Polyarylat weiter mindestens eine reaktive Endgruppe umfasst, gewählt aus der Gruppe bestehend aus Epoxidgruppen, Thioepoxidgruppen, aliphatischen Hydroxygruppen, Aldehydgruppen, Acetalgruppen, Ketalgruppen, Thioacetalgruppen, Thioketalgruppen, Ketongruppen, Thioketongruppen, Nitrilgruppen, Isonitrilgruppen, Amidgruppen, Amingruppen, Azidgruppen, Hydrazingruppen, Azo-Gruppen, Thiolgruppen, Selenolgruppen, Disulfidgruppen, Diselenidgruppen, Silylethergruppen, Silylestergruppen, Silangruppen, Olefingruppen, aktivierten Olefingruppen, Urethangruppen, Acylurethangruppen, Haloarengruppen, Nitroarengruppen, Oximgruppen, aliphatischen Nitrogruppen, Thioureagruppen, Lactongruppen, Guanidingruppen und Amidingruppen.

## Revendications

**1.** Composition durcie comprenant des unités structurelles dérivées des composants A et B :

(i) le composant A comprenant au moins un polyarylate comprenant des unités structurelles répondant à la formule I

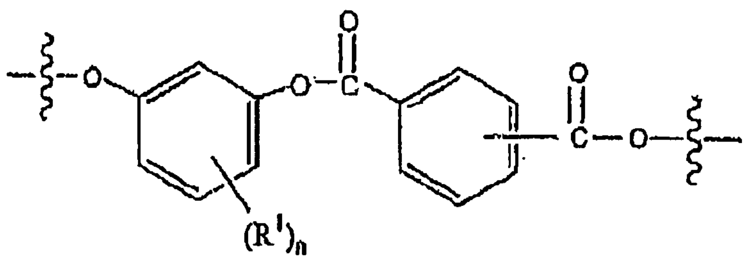

Formule (I)

dans laquelle $R^1$ représente indépendamment à chaque occurrence un radical alkyle en $C_1$ à $C_{12}$ et n vaut de 0 à 3, ledit polyarylate comprenant en outre des groupes carboxy terminaux ; et
(ii) le composant B étant constitué d'au moins une « espèce organique » comprenant un ou plusieurs groupes fonctionnels, lesdits groupes fonctionnels étant chimiquement réactifs avec les groupes carboxy terminaux du polyarylate du composant A, dans laquelle les groupes fonctionnels du composant B sont choisis dans le groupe constitué des isocyanates, des époxydes, des esters aliphatiques, des groupes hydroxyles et des esters aromatiques.

**2.** Composition selon la revendication 1 comprenant en outre une co-résine.

**3.** Composition selon la revendication 1 dans laquelle la concentration du composant A est d'environ 1 à environ 99 pour cent en poids du poids total de la composition.

**4.** Composition selon la revendication 1 dans laquelle ledit polyarylate a un poids moléculaire moyen en nombre dans une plage située entre environ 2 000 et environ 5 000 grammes par mole.

**5.** Composition selon la revendication 1 comprenant en outre un composant C qui est un ou plusieurs catalyseurs qui a favorisé la réaction chimique entre le polyarylate du composant A et l'« espèce organique » du composant B.

**6.** Composition selon la revendication 1 dans laquelle ledit polyarylate a un poids moléculaire moyen en poids dans une plage située entre environ 500 et environ 14 000 grammes par molécule.

**7.** Procédé de préparation d'une composition durcie selon la revendication 1 comprenant la formation d'un mélange de composants de revêtement comprenant le composant A et le composant B et le durcissement du mélange des composants de revêtement.

**8.** Procédé selon la revendication 7, dans lequel le composant C tel que spécifié dans la revendication 5 est employé.

**9.** Procédé selon la revendication 7 ou 8, dans lequel le mélange de composants de revêtement est appliqué sur un substrat avant le revêtement.

**10.** Article comprenant :

une couche de substrat comprenant au moins un polymère thermoplastique, un polymère thermodurcissable, un matière cellulosique, du verre ou du métal, et
au moins une couche de revêtement durcie au-dessus, ledit revêtement comprenant la composition durcie telle que définie dans la revendication 1 dans lequel :

le composant A comprend au moins un polyarylate oligomère.

**11.** Composition selon la revendication 1 comprenant les composants A et B:

dans laquelle $R^1$ représente indépendamment à chaque occurrence un radical alkyle en $C_1$ à $C_{12}$ et « n » vaut de 0 à 3, ledit polyarylate fonctionnalisé comprenant en outre au moins un groupe terminal réactif choisi dans le groupe constitué des groupes époxyde, des groupes thioépoxyde, des groupes hydroxy aliphatiques, des groupes aldéhyde, des groupes acétal, des groupes cétal, des groupes thioacétal, des groupes thiocétal, des groupes cétone, des groupes thiocétone, des groupes nitrile, des groupes isonitrile, des groupes amide, des groupes amine, des groupes azide, des groupes hydrazine, des groupes azoïques, des groupes thiol, des groupes sélénol, des groupes bisulfure, des groupes disélénide, des groupes silyléther, des groupes silylester, des groupes silane, des groupes oléfine, des groupes oléfine activée, des groupes uréthane, des groupes acyluréthane, des groupes halogénoarène, des groupes nitroarène, des groupes oxime, des groupes nitro aliphatiques, des groupes thiourée, des groupes lactone, des groupes guanidine et des groupes amidine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 81952404 A
- US 60538081 B
- JP 10676892 A
- US 4217438 A
- US 5821322 A